(19) Europäisches Patentamt
European Patent Office
Office européen des brevets

(11) **EP 4 701 239 A1**

(12) **EUROPEAN PATENT APPLICATION**
published in accordance with Art. 153(4) EPC

(43) Date of publication:
**25.02.2026 Bulletin 2026/09**

(21) Application number: **24830552.6**

(22) Date of filing: **17.06.2024**

(51) International Patent Classification (IPC):
***H04W 4/02*** ^(2018.01)

(52) Cooperative Patent Classification (CPC):
**H04L 5/00; H04W 4/02; H04W 64/00**

(86) International application number:
**PCT/CN2024/099669**

(87) International publication number:
**WO 2025/001906 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.06.2023 CN 202310794329**

(71) Applicant: **Huawei Technologies Co., Ltd.
Shenzhen, Guangdong 518129 (CN)**

(72) Inventors:
• **WANG, Han
Shenzhen, Guangdong 518129 (CN)**
• **HUANG, Su
Shenzhen, Guangdong 518129 (CN)**
• **LI, Cheng
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **POSITIONING METHOD, APPARATUS AND SYSTEM AND STORAGE MEDIUM**

(57) A positioning method, an apparatus, a system, and a storage medium are provided to improve positioning accuracy. In this application, a first apparatus determines a first integer ambiguity based on first measurement information. The first measurement information includes time measurement information and/or carrier phase measurement information. The first measurement information is obtained by measuring at least one first reference signal. The first apparatus may further obtain first information. The first information indicates reliability of the first integer ambiguity. Because the first information indicates reliability of the first integer ambiguity, positioning accuracy can be improved by performing positioning based on the first information and the first integer ambiguity.

FIG. 3

**Description**

CROSS-REFERENCE TO RELATED APPLICATIONS

This application claims priority to Chinese Patent Application No. 202310794329.9, filed with the China National Intellectual Property Administration on June 29, 2023 and entitled "POSITIONING METHOD, APPARATUS, SYSTEM, AND STORAGE MEDIUM", which is incorporated herein by reference in its entirety.

TECHNICAL FIELD

This application relates to the field of positioning technologies, and in particular, to a positioning method, an apparatus, a system, and a storage medium.

BACKGROUND

With rapid development of communication technologies, high-precision positioning is gradually determined as an important research project in a 5th generation mobile communication system (5th generation mobile networks or 5th generation wireless systems, 5G) of the 3rd generation partnership project (3rd generation partnership project, 3GPP). Scenarios of new radio (New Radio, NR) positioning mainly include: enhanced mobile broadband (enhanced mobile broadband, eMBB) outdoor, eMBB indoor, ultra-reliable and low latency communications (ultra-reliable and low latency communications, URLLC), and massive machine type communication (massive machine type of communication, mMTC)/internet of things (internet of things, IOT). NR positioning also requires characteristics such as high security, scalability, high availability, and precision assurance in high-speed applications.

In the 3GPP standard, a plurality of positioning technologies are supported, such as a carrier phase positioning technology, a time difference of arrival (time of arrival, TDOA), an angle of departure (angle of departure, AOD), a time difference of arrival (time of arrival, TDOA), an angle of arrival (angle of arrival, AOA), and a round trip time (round trip time, RTT). In a process of performing positioning based on one or more positioning technologies, a measurement apparatus (for example, a base station or a terminal) may measure a received reference signal, to obtain measurement information. The measurement information may be used to position a reference signal transmitting end and/or a reference signal receiving end. The measurement information may include a value of a measurement parameter. The measurement parameter may be associated with the positioning technology. For example, if the positioning technology is the AOA, the measurement parameter may include, for example, an angle of arrival (angle of arrival, AOA). For another example, if the positioning technology is the TDOA, the measurement parameter may include a time difference of arrival of the reference signal.

For example, in some positioning technologies (for example, the carrier phase positioning technology), the measurement information may be used to determine an integer ambiguity, the integer ambiguity is used to determine a distance between the reference signal transmitting end and the reference signal receiving end, and the distance is used to position the reference signal transmitting end and/or the reference signal receiving end.

With development of positioning technologies, how to improve positioning accuracy becomes an urgent problem to be resolved.

SUMMARY

This application provides a positioning method, an apparatus, a system, and a storage medium, to obtain an integer ambiguity and information indicating reliability of the integer ambiguity, thereby improving positioning accuracy.

**According to a first aspect,** this application provides a positioning method. The method may be performed by a first apparatus. The first apparatus may be, for example, a terminal, a chip system inside a terminal, a network device, a chip system inside a network device, a location management device, or a chip system inside a location management device.

In this application, the first apparatus determines at least one first integer ambiguity based on first measurement information. The first measurement information includes time measurement information and/or carrier phase measurement information. The first measurement information is obtained by measuring at least one first reference signal. The first apparatus obtains first information. The first information indicates reliability of the at least one first integer ambiguity.

In this application, the first information and the at least one first integer ambiguity are used for positioning. The first information and the at least one first integer ambiguity may be used for terminal positioning, the at least one first reference signal may include a reference signal sent by another apparatus (for example, a base station or another terminal) to the terminal, and the at least one first reference signal may also include a reference signal sent by the terminal to another apparatus (for example, a base station or another terminal).

In this application, the at least one first integer ambiguity may be one or more first integer ambiguities. A plurality of first integer ambiguities may correspond to a plurality of pieces of first information. For example, the plurality of first integer ambiguities may be in one-to-one correspondence with the plurality of pieces of first information, and one piece of first information indicates reliability of one first integer ambiguity. Alternatively, one piece of first information may correspond to a plurality of first integer ambiguities, and the first information may indicate reliability of the plurality of first integer ambiguities.

In this application, the first apparatus may obtain the first information, and the first information indicates reliability of the at least one first integer ambiguity. Therefore, the first information can assist in determining a more accurate integer ambiguity, so that positioning accuracy can be improved when positioning is performed based on an integer ambiguity.

This application is applicable to a plurality of scenarios. The following uses two possible scenarios for illustration.

Scenario 1: The first apparatus may be a terminal, a chip system inside a terminal, a network device, or a chip system inside a network device, and a second apparatus may be a location management device or a chip system inside a location management device. For example, the first apparatus sends the at least one first integer ambiguity and the first information. Correspondingly, the second apparatus receives the at least one first integer ambiguity and the first information. The second apparatus performs positioning based on the at least one first integer ambiguity and the first information. For example, the second apparatus determines a third integer ambiguity based on the at least one first integer ambiguity and the first information. The third integer ambiguity is used for positioning. For example, the third integer ambiguity is used for terminal positioning. In this way, the second apparatus may determine a more accurate integer ambiguity with assistance of the first information. For example, the second apparatus may select an integer ambiguity with highest reliability to perform positioning. For another example, the second apparatus may select a plurality of integer ambiguities with relatively high reliability to perform positioning. This can improve positioning accuracy.

Scenario 2: The first apparatus may be a location management device or a chip system inside a location management device. For example, before determining the at least one first integer ambiguity based on the first measurement information, the first apparatus further receives the first measurement information. The first apparatus performs positioning based on the at least one first integer ambiguity and the first information. For example, the first apparatus determines a third integer ambiguity based on the at least one first integer ambiguity and the first information. The third integer ambiguity is used for positioning. For example, the third integer ambiguity is used for terminal positioning. In this solution, the first apparatus may receive the first measurement information from another apparatus, for example, receive the first measurement information from a terminal or a network device, and the first apparatus may obtain the first information based on the measurement information, so that positioning accuracy can be improved based on the first information.

In a possible implementation, the first information includes information indicating the following content: a likelihood of accuracy of the at least one first integer ambiguity. The likelihood of accuracy of the first integer ambiguity may be replaced with a probability of accuracy of the first integer ambiguity, a degree of accuracy of the first integer ambiguity, or the like. The degree of accuracy of the first integer ambiguity can be more accurately reflected by using the likelihood, thereby further improving positioning accuracy.

The first apparatus determines the first integer ambiguity in a plurality of manners. The following uses two possible manners for illustration.

Manner 1: The first apparatus determines a first integer ambiguity set based on the first measurement information, where the first integer ambiguity set includes at least one integer ambiguity. The first integer ambiguity set includes a first integer ambiguity in the at least one first integer ambiguity. In this solution, the first apparatus may determine the first integer ambiguity set, and then consider an integer ambiguity in the first integer ambiguity set as the first integer ambiguity, to determine reliability of the at least one first integer ambiguity.

Manner 2: A first integer ambiguity in the at least one first integer ambiguity is determined based on an integer ambiguity in a first integer ambiguity set. In this solution, the first apparatus may determine the first integer ambiguity set, and then determine the first integer ambiguity based on an integer ambiguity in the first integer ambiguity set. For example, the first integer ambiguity set includes two integer ambiguities, an integer ambiguity of a central frequency of frequencies corresponding to the two integer ambiguities may be considered as the first integer ambiguity, and the first integer ambiguity may not belong to the integer ambiguity set.

In another possible implementation, the at least one first integer ambiguity may partially belong to the first integer ambiguity set and partially not belong to the first integer ambiguity set, or all may belong to the first integer ambiguity, or all may not belong to the first integer ambiguity set. This can improve solution flexibility.

In a possible implementation, the first apparatus determines at least one second integer ambiguity based on second measurement information, where the second measurement information includes time measurement information and/or carrier phase measurement information, and the second measurement information is obtained by measuring at least one second reference signal. The first apparatus obtains the at least one second integer ambiguity and second information, where the second information indicates reliability of the at least one second integer ambiguity, and the at least one second integer ambiguity, the second information, the at least one first integer ambiguity, and the first information are used to determine the third integer ambiguity.

In this application, the at least one second integer ambiguity may be one or more second integer ambiguities. A plurality of second integer ambiguities may correspond to a plurality of pieces of second information. For example, the plurality of second integer ambiguities may be in one-to-one correspondence with the plurality of pieces of second information, and one piece of second information indicates reliability of one second integer ambiguity. Alternatively, one piece of second information may correspond to a plurality of second integer ambiguities, and the second information may indicate reliability of the plurality of second integer ambiguities.

The first apparatus further obtains the second information and the at least one second integer ambiguity, and the second information indicates reliability of the at least one second integer ambiguity. Therefore, a more accurate integer ambiguity can be determined based on the first information and the second information, so that positioning accuracy can be improved when positioning is performed based on an integer ambiguity.

In a scenario to which this application is applicable, the first apparatus may be a terminal, a chip system inside a terminal, a network device, or a chip system inside a network device, and the second apparatus may be a location management device or a chip system inside a location management device. For example, the first apparatus sends the at least one second integer ambiguity and the second information. Correspondingly, the second apparatus receives the at least one second integer ambiguity and the second information. The second apparatus determines a third integer ambiguity based on the at least one first integer ambiguity, the first information, the at least one second integer ambiguity, and the second information, where the third integer ambiguity is used for positioning. In this way, the second apparatus may determine a more accurate integer ambiguity with assistance of the first information and the second information, thereby improving positioning accuracy.

In another scenario to which this application is applicable, the first apparatus may be a location management device or a chip system inside a location management device. For example, before the first apparatus determines the at least one second integer ambiguity based on the second measurement information, the first apparatus receives the second measurement information. The first apparatus determines a third integer ambiguity based on the at least one first integer ambiguity, the first information, the at least one second integer ambiguity, and the second information, where the third integer ambiguity is used for positioning. In this solution, the first apparatus may receive the first measurement information from another apparatus, and may further receive the second measurement information from another apparatus, for example, receive the first measurement information and the second measurement information from a terminal or a network device, and the first apparatus may obtain the first information and the second information based on the measurement information, so that positioning accuracy can be further improved based on the first information and the second information.

In a possible implementation, the second information includes information indicating the following content: a likelihood of accuracy of the at least one second integer ambiguity. The likelihood of accuracy of the second integer ambiguity may be replaced with a probability of accuracy of the second integer ambiguity, a degree of accuracy of the second integer ambiguity, or the like. The degree of accuracy of the second integer ambiguity can be more accurately reflected by using the likelihood, thereby further improving positioning accuracy.

The first apparatus determines the second integer ambiguity in a plurality of manners. The following uses two possible manners for illustration.

Manner 1: The first apparatus determines a second integer ambiguity set based on the second measurement information, where the second integer ambiguity set includes at least one integer ambiguity. The second integer ambiguity set includes a second integer ambiguity in the at least one second integer ambiguity. In this solution, the first apparatus may determine the second integer ambiguity set, and then consider an integer ambiguity in the second integer ambiguity set as the second integer ambiguity, to determine reliability of the at least one second integer ambiguity.

Manner 2: A second integer ambiguity in the at least one second integer ambiguity is determined based on an integer ambiguity in a second integer ambiguity set. In this solution, the first apparatus may determine the second integer ambiguity set, and then determine the second integer ambiguity based on an integer ambiguity in the second integer ambiguity set. For example, the second integer ambiguity set includes two integer ambiguities, an integer ambiguity of a central frequency of frequencies corresponding to the two integer ambiguities may be considered as the second integer ambiguity, and the second integer ambiguity may not belong to the integer ambiguity set.

In another possible implementation, the at least one second integer ambiguity may partially belong to the second integer ambiguity set and partially not belong to the second integer ambiguity set, or all may belong to the second integer ambiguity set, or all may not belong to the second integer ambiguity set. This can improve solution flexibility.

In a possible implementation, the second information and the first information are same information. For example, the first apparatus determines a likelihood (or reliability), where the likelihood (or reliability) is a likelihood (or reliability) of the first integer ambiguity and the second integer ambiguity.

In a possible implementation, the first measurement information is obtained based on measurement information of a first frequency of the at least one first reference signal. The second measurement information is obtained based on measurement information of a second frequency of the at least one second reference signal. The first frequency is different from the second frequency.

In a possible implementation, one first reference signal in the at least one first reference signal and one second reference signal in the at least one second reference signal are a same reference signal.

This can facilitate configuration on a network side. For example, the first reference signal and the second reference signal have a same resource identity and a same resource set identity.

In a possible implementation, a degree of proximity between a first distance value and a second distance value is positively correlated with the likelihood of accuracy of the at least one first integer ambiguity. The first distance value is determined based on the first integer ambiguity. In another possible implementation, a degree of proximity between a first distance value and a second distance value is positively correlated with the likelihood of accuracy of the at least one second integer ambiguity. The second distance value is determined based on the second integer ambiguity.

For example, the first distance value may indicate a distance from a transmitting end of the first reference signal to the first communication apparatus, and the second distance value indicates a distance from a transmitting end of the second reference signal to the first communication apparatus. The transmitting end of the first reference signal may be the same as the transmitting end of the second reference signal. Therefore, two distance values (namely, the first distance value and the second distance value) corresponding to the first reference signal and the second reference signal should be close or the same, and when the first distance value is closer to the second distance value, a degree of correctness of the first distance value and the second distance value is higher, and then it may be determined that a degree of accuracy of the first integer ambiguity for determining the first distance value and the second integer ambiguity for determining the second distance value is higher. It can be learned that, in this application, it is very reasonable to reflect a likelihood of accuracy of two integer ambiguities based on a degree of proximity between two distance values, and this solution is simple and easy to implement.

In a possible implementation, the first distance value is alternatively determined based on a first wavelength corresponding to the first frequency and the carrier phase measurement information in the first measurement information. In another possible implementation, the second distance value is alternatively determined based on a second wavelength corresponding to the second frequency and the carrier phase measurement information in the second measurement information.

In a possible implementation, the at least one first integer ambiguity is determined based on at least one of a third distance value, the first wavelength corresponding to the first frequency, or an error amount of the time measurement information in the first measurement information. In another possible implementation, the at least one second integer ambiguity is determined based on at least one of a third distance value, the second wavelength corresponding to the second frequency, or an error amount of the time measurement information in the second measurement information.

The third distance value may indicate a distance from the transmitting end of the first reference signal and/or the second reference signal to the first communication apparatus.

For example, the third distance value is determined based on the time measurement information included in the first measurement information and/or the time measurement information included in the second measurement information.

For another example, the third distance value is determined based on at least one of a third wavelength corresponding to a third frequency, a fourth integer ambiguity corresponding to the third frequency, the carrier phase measurement information included in the first measurement information, or the carrier phase measurement information included in the second measurement information. The third frequency is determined based on the first frequency and the second frequency.

In this way, the at least one first integer ambiguity and the at least one second integer ambiguity may be calculated based on the third distance value.

In a possible implementation, the third frequency is a center frequency of a segment of bandwidth. The bandwidth may be understood as a bandwidth of a frequency domain resource occupied by the first reference signal and/or the second reference signal. The bandwidth includes the first frequency and the second frequency. The center frequency is between the first frequency and the second frequency. The first frequency and the second frequency may be considered as frequencies at two ends of the bandwidth. Compared with a frequency #1 and a frequency #2, the center frequency corresponds to more accurate phase information. Therefore, positioning based on an integer ambiguity corresponding to the center frequency can further improve positioning accuracy and robustness.

In a possible implementation, the fourth integer ambiguity corresponding to the third frequency is determined based on the third wavelength and a fourth distance value. The third distance value indicates a distance from the transmitting end of the first reference signal and/or the second reference signal to the first communication apparatus.

In a possible implementation, the fourth distance value is determined based on the time measurement information included in the first measurement information and/or the time measurement information included in the second measurement information. In this way, the third distance value determined based on at least one of the third wavelength corresponding to the third frequency, the fourth integer ambiguity corresponding to the third frequency, the carrier phase measurement information included in the first measurement information, or the carrier phase measurement information included in the second measurement information may be more accurate, so that the first integer ambiguity and the second integer ambiguity that are determined based on the third distance value can be more accurate.

In a possible implementation, the first information includes a soft bit value, and the second information includes a soft bit value. In this way, the degree of accuracy of the first integer ambiguity and/or the second integer ambiguity may be more accurate.

In a possible implementation, the first measurement information is obtained by measuring the at least one first reference signal, and the at least one first reference signal includes a third reference signal and a fourth reference signal. The carrier phase measurement information in the first measurement information includes at least one of the following content:

information indicating a first phase, where the first phase is obtained by a third apparatus by measuring the third reference signal from a fourth apparatus;
information indicating a first phase difference, where the first phase difference is obtained based on the first phase and a second phase, and the second phase is obtained by the third apparatus by measuring the fourth reference signal from a fifth apparatus;
information indicating a second phase difference, where the second phase difference is obtained based on the first phase and a third phase, and the third phase is obtained by a sixth apparatus by measuring the third reference signal from the fourth apparatus;
information indicating a third phase difference, where the third phase difference is obtained based on the first phase difference and a fourth phase difference, the fourth phase difference is obtained based on a fourth phase and a fifth phase, the fourth phase is obtained by the sixth apparatus by measuring the third reference signal from the fourth apparatus, and the fifth phase is obtained by the sixth apparatus by measuring the fourth reference signal from the fifth apparatus; or
information indicating the fourth phase difference, where the fourth phase difference is determined based on an obtained phase arrival error PAE, and the fourth phase difference is further determined based on the first phase and/or the first phase difference.

In a possible implementation, the time measurement information includes at least one of the following: a time of arrival (time of arrival, TOA), a relative time of arrival (relative time of arrival, RTOA), a reference signal time difference of arrival (reference signal time difference, RSTD), a receive-transmit time difference (Rx-Tx Time Difference), or the like.

In a possible implementation, the carrier phase measurement information includes at least one of the following: a reference signal carrier phase (reference Signal Carrier Phase, RSCP), a reference signal carrier phase difference (reference signal carrier phase difference, RSCPD), a multi-subband carrier phase (carrier phase), a multi-subband carrier phase difference (carrier phase difference), a multi-frequency carrier phase, a multi-frequency carrier phase difference, or the like.

**According to a second aspect,** this application provides a positioning method. A second apparatus in the method may be a location management device or a chip system inside a location management device.

In this application, the second apparatus receives at least one first integer ambiguity and first information. The at least one first integer ambiguity is determined based on first measurement information. The first measurement information includes time measurement information and/or carrier phase measurement information. The first measurement information is obtained by measuring a first reference signal. The first information indicates reliability of the at least one first integer ambiguity. The second apparatus performs positioning, for example, terminal positioning, based on the at least one first integer ambiguity and the first information. For example, the second apparatus determines a third integer ambiguity based on the at least one first integer ambiguity and the first information. The third integer ambiguity is used for positioning.

In this application, the second apparatus may obtain the at least one first integer ambiguity and the first information, and the first information indicates reliability of the at least one first integer ambiguity. Therefore, the first information can assist in determining a more accurate integer ambiguity, so that positioning accuracy can be improved when positioning is performed based on an integer ambiguity.

In a possible implementation, the second apparatus receives at least one second integer ambiguity and second information. The at least one second integer ambiguity is determined based on second measurement information. The second measurement information includes time measurement information and/or carrier phase measurement information. The second measurement information is obtained by measuring a second reference signal. The second information indicates reliability of the at least one second integer ambiguity. The second apparatus performs positioning based on the at least one first integer ambiguity, the first information, the at least one second integer ambiguity, and the second information. For example, the second apparatus determines a third integer ambiguity based on the at least one first integer ambiguity, the first information, the at least one second integer ambiguity, and the second information, where the third integer ambiguity is used for positioning.

In this application, the second apparatus may obtain the at least one first integer ambiguity, the first information, the at least one second integer ambiguity, and the second information, the first information indicates reliability of the at least one first integer ambiguity, and the second information indicates reliability of the at least one second integer ambiguity. Therefore, the first information and the second information can assist in determining a more accurate integer ambiguity, so that positioning accuracy can be improved when positioning is performed based on an integer ambiguity.

For related descriptions of the first integer ambiguity, the first information, the second integer ambiguity, and the second information, refer to the related descriptions of the first aspect. Details are not described again.

**According to a third aspect,** a communication apparatus is provided. The communication apparatus may be the foregoing first apparatus or the foregoing second apparatus. The communication apparatus may include a communication unit and a processing unit, to perform either of the first aspect and the second aspect or perform any one of the possible implementations of the first aspect and the second aspect. The communication unit is configured to perform functions related to sending and receiving.

Optionally, the communication unit includes a transceiver unit. The transceiver unit may include a receiving unit and a sending unit. The receiving unit may be configured to perform a receiving-related function, and the sending unit may be configured to perform a sending-related function. In a design, the communication apparatus is a communication chip, the processing unit may be one or more processors or processor cores, and the communication unit may be an input/output circuit or a port of the communication chip.

In another design, the communication unit may be a transceiver, and the transceiver may include a transmitter and a receiver; or the communication unit is a transceiver machine, and the transceiver machine includes a transmitter machine and a receiver machine. The receiver (or the receiver machine) may be configured to perform a receiving-related function, and the transmitter (or the transmitter machine) and the receiving unit may be configured to perform a sending-related function.

Optionally, the communication apparatus further includes modules that may be configured to perform either of the first aspect and the second aspect or perform any one of the possible implementations of the first aspect and the second aspect.

**According to a fourth aspect,** a communication apparatus is provided. The communication apparatus may be the foregoing first apparatus or the foregoing second apparatus. The communication apparatus may include a processor and a memory, to perform either of the first aspect and the second aspect or perform any one of the possible implementations of the first aspect and the second aspect. Optionally, the communication apparatus further includes a transceiver. The memory is configured to store a computer program or instructions, the processor is configured to invoke the computer program or the instructions from the memory and run the computer program or the instructions, and when the processor executes the computer program or the instructions in the memory, the communication apparatus is enabled to perform either of the first aspect and the second aspect or perform any one of the possible implementations of the first aspect and the second aspect.

Optionally, there are one or more processors, and there are one or more memories.

Optionally, the memory may be integrated with the processor, or the memory and the processor are separately disposed.

Optionally, the transceiver may include a transmitter (transmitter machine) and a receiver (receiver machine).

**According to a fifth aspect,** a communication apparatus is provided. The communication apparatus may be the foregoing first apparatus or the foregoing second apparatus. The communication apparatus may include a processor, to perform either of the first aspect and the second aspect or perform any one of the possible implementations of the first aspect and the second aspect. The processor is coupled to a memory. Optionally, the communication apparatus further includes the memory. Optionally, the communication apparatus further includes a communication interface, and the processor is coupled to the communication interface.

In an implementation, when the communication apparatus is the first apparatus or the second apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

**According to a sixth aspect,** a system is provided. The system includes the foregoing first apparatus.

In a possible implementation, the system may further include a second apparatus.

**According to a seventh aspect,** a system is provided. The system includes the foregoing first apparatus.

In a possible implementation, the system may further include a measurement information sending apparatus, and the measurement information sending apparatus is configured to send first measurement information.

**According to an eighth aspect,** a computer program product is provided. The computer program product includes a computer program (which may also be referred to as code or instructions). When the computer program runs, a computer is enabled to perform either of the first aspect and the second aspect or perform any one of the possible implementations of the first aspect and the second aspect.

**According to a ninth aspect,** a computer-readable storage medium is provided. The computer-readable medium stores a computer program (which may also be referred to as code or instructions). When the computer program runs on a computer, the computer is enabled to perform either of the first aspect and the second aspect or perform any one of the possible implementations of the first aspect and the second aspect.

**According to a tenth aspect,** a processing apparatus is provided, including an interface circuit and a processing circuit. The interface circuit may include an input circuit and an output circuit. The processing circuit is configured to: receive a signal through the input circuit, and transmit a signal through the output circuit, so that either of the first aspect and the second aspect or any one of the possible implementations of the first aspect and the second aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, and a signal that is output by the output circuit may be output to, for example, but not limited to, a transmitter and transmitted by the transmitter. In addition, the input circuit and the output circuit may be a same circuit. The circuit is used as the input circuit and the output circuit at different moments. Specific implementations of the processor and various circuits are not limited in this application.

In an implementation, when the communication apparatus is a first apparatus or a second apparatus, the interface circuit may be a radio frequency processing chip in the first apparatus or the second apparatus, and the processing circuit may be a baseband processing chip in the first apparatus or the second apparatus.

In another implementation, the communication apparatus may be some components in the first apparatus or the second apparatus, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

BRIEF DESCRIPTION OF DRAWINGS

FIG. 1 is a possible diagram of an integer ambiguity;
FIG. 2A is a diagram of an architecture of a communication system to which an embodiment of this application is applicable;
FIG. 2B is a diagram of an architecture of another communication system to which an embodiment of this application is applicable;
FIG. 2C is a diagram of an architecture of another communication system to which an embodiment of this application is applicable;
FIG. 2D is a diagram of an architecture of another communication system to which an embodiment of this application is applicable;
FIG. 2E is a diagram of an architecture of another communication system to which an embodiment of this application is applicable;
FIG. 2F is a diagram of an architecture of another communication system to which an embodiment of this application is applicable;
FIG. 3 is a possible schematic flowchart of a positioning method according to an embodiment of this application;
FIG. 4 is a possible schematic flowchart of a positioning method according to an embodiment of this application;
FIG. 5 is a possible schematic flowchart of a positioning method according to an embodiment of this application;
FIG. 6 is a possible schematic flowchart of a positioning method according to an embodiment of this application;
FIG. 7 is a possible schematic flowchart of a positioning method according to an embodiment of this application;
FIG. 8 is a possible schematic flowchart of a positioning method according to an embodiment of this application;
FIG. 9 is a diagram of a structure of a communication apparatus according to an embodiment of this application; and
FIG. 10 is a diagram of a structure of another communication apparatus according to an embodiment of this application.

DESCRIPTION OF EMBODIMENTS

The following first describes nouns and terms in embodiments of this application.

(1) Reference signal.

In embodiments of this application, the reference signal may be, for example, at least one of a dual-subband reference signal (dual-subband reference signal, DS-RS), a synchronization signal-physical sidelink broadcast channel block (synchronization signal and physical sidelink broadcast channel block, SSB), a positioning reference signal (positioning reference signal, PRS) (for example, a sidelink (sidelink, SL)-PRS), a sounding reference signal (sounding reference signal, SRS), a channel state information reference signal (channel state information reference signal, CSI-RS), a demodulation reference signal (demodulation reference signal, DMRS), or a phase tracking reference signal (phase-tracking reference signals, PTRS).

A sidelink in embodiments of this application may also be referred to as a side link, a sidelink, a direct link, an edge sidelink, a secondary link, or the like. In embodiments of this application, the foregoing terms each mean a link established between devices of a same type, and have a same meaning. The devices of a same type may be a link between terminal devices, or the like. For the link between terminal devices, there is a device-to-device (device to device, D2D) link defined in the 3rd generation partnership project (the 3rd Generation Partnership Project, 3GPP) release (Rel)-12/13, and there is also a vehicle to everything (vehicle to everything, V2X) link defined by the 3GPP for the internet of vehicles, such as a vehicle to vehicle, vehicle to mobile phone, or vehicle to any entity link, including Rel-14/15. An NR system-based V2X link and the like in Rel-16 and later releases that are currently being researched by the 3GPP are further included.

Embodiments of this application relate to a concept of one reference signal. For example, one first reference signal and one second reference signal may be a same reference signal. When two reference signals are a same reference signal, it may be understood that the two reference signals correspond to a same resource identity (identity, ID) and a same resource set ID. It may also be understood that a reference signal transmitting end sends a reference signal, and the reference signal may be referred to as a first reference signal, or may be referred to as a second reference signal.

(2) Integer ambiguity.

The integer ambiguity in embodiments of this application may be understood as a value of a quantity of integers of wavelengths included in a distance between a reference signal transmitting end and a reference signal receiving end. The integer ambiguity may be referred to as integer ambiguity.

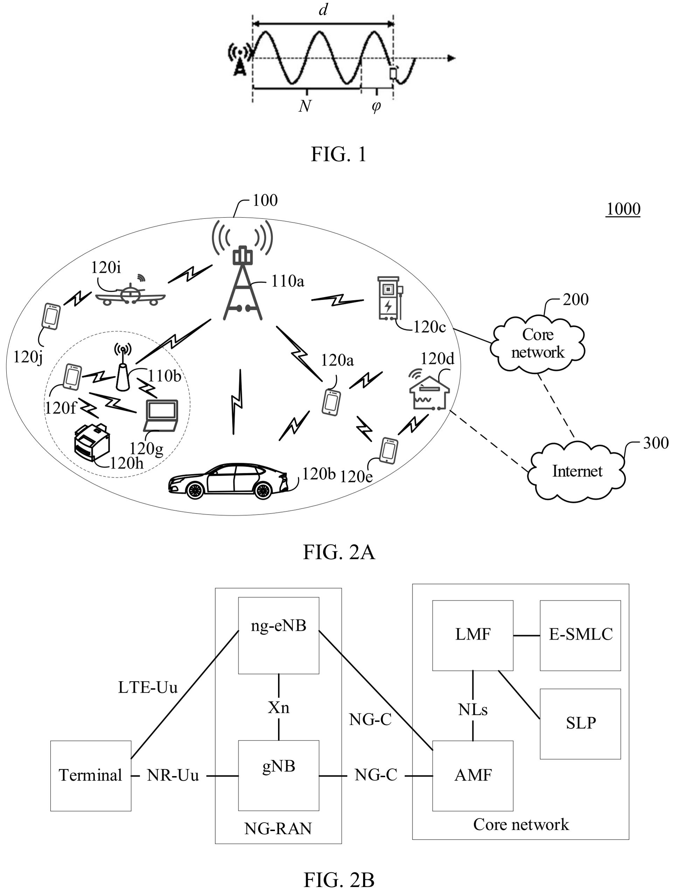

FIG. 1 is an example of a possible diagram of an integer ambiguity. As shown in FIG. 1, d in FIG. 1 is a distance between a reference signal transmitting end and a reference signal receiving end, and d satisfies $d=\lambda(N+\varphi/2\pi)$, where $\varphi$ is carrier phase measurement information obtained through measurement by the receiving end, N is an integer ambiguity, N is a positive integer, a value of N indicates that the distance d includes N carrier integer cycles, and $\lambda$ is a carrier wavelength.

**FIG. 2A** is an example of a diagram of an architecture of a communication system to which an embodiment of this application is applicable. As shown in FIG. 2A, the communication system includes a radio access network 100 and a core network 200. Optionally, the communication system 1000 may further include an internet 300. The radio access network 100 may include at least one radio access network device (for example, 110a and 110b in FIG. 2A), and may further include at least one terminal (for example, 120a to 120j in FIG. 2A). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 2A is merely a diagram. The communication system may further include other network devices, for example, may further include a wireless relay device and a wireless backhaul device, which are not shown in FIG. 2A.

The network device in embodiments of this application includes, for example, a radio access network (radio access network, RAN) device. The radio access network device may be a base station (base station), an evolved NodeB (evolved NodeB, eNodeB), a transmission reception point (transmission reception point, TRP), a transmission point (transmission point, TP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like.

In another possible scenario, a plurality of RAN nodes collaborate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU).

The CU and the DU may be separately arranged, or may be included in a same network element, for example, a baseband unit (baseband unit, BBU). Herein, the CU completes functions of a radio resource control protocol and a packet data convergence protocol (packet data convergence protocol, PDCP) of the base station, and may further complete functions of a service data adaptation protocol (service data adaptation protocol, SDAP); and the DU completes functions of a radio link control layer and a medium access control (medium access control, MAC) layer of the base station, and may further complete some or all of functions of a physical layer. For detailed descriptions of the foregoing protocol layers, refer to technical specifications related to the 3rd generation partnership project (3rd generation partnership project, 3GPP). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an open CU (open-CU, O-CU), the DU may also be referred to as an open DU (open-DU, O-DU), the CU-CP may also be referred to as an open CU-CP (open-CU-CP, O-CU-CP), the CU-UP may also be referred to as an O-CU-UP, and the RU may also be referred to as an open RU (open-RU, O-RU). For ease of description, the CU, the CU-CP, the CU-UP, the DU, and the RU are used as an example for description in this application. Any one of the CU (or the CU-CP and the CU-UP), the DU, and the RU in this application may be implemented by using a software module, a hardware module, or a combination of a software module and a hardware module.

In embodiments of this application, when a first apparatus is a network device or a chip system inside a network device, a step (for example, one of step 301, step 302, step 401, step 402, step 404, step 405, step 502, step 503, step 504, step 602, step 603, step 605, step 606, or step 607) performed by the first apparatus may be performed by a module inside the network device, for example, may be performed by one or more of a CU, a DU, an O-RU, an O-DU, an O-CU-UP, or an O-CU-CP.

The radio access network device may be a macro base station (for example, 110a in FIG. 2A), a micro base station or an indoor station (for example, 110b in FIG. 2A), a relay node, a donor node, or the like. A specific technology and a specific device form that are used by the radio access network device are not limited in embodiments of this application. For ease of description, the following provides descriptions by using an example in which the radio access network device is a base station.

The terminal may also be referred to as a terminal, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, a sensor, or the like. A specific technology and a specific device form that are used by the terminal are not limited in embodiments of this application.

The terminal may establish a connection to a carrier network through an interface (for example, N1) provided by the carrier network, and use services such as data and/or voice provided by the carrier network. The terminal may further access a domain name system (domain name system, DNS) through the carrier network, and use a carrier service deployed on the DNS and/or a service provided by a third party. The third party may be a service party other than the carrier network and the terminal, and may provide services such as data and/or voice for the terminal. A specific representation form of the third party may be specifically determined based on an actual application scenario, and is not limited herein.

The terminal may also be referred to as a terminal, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, a roadside unit (roadside unit, RSU), or the like. A specific technology and a specific device form that are used by the terminal are not limited in embodiments of this application.

The base station and the terminal may be at fixed locations or are movable. The base station and the terminal may be deployed on the land, including an indoor device, an outdoor device, a handheld device, or a vehicle-mounted device; or may be deployed on the water; or may be deployed on an airplane, a balloon, or an artificial satellite in the air. Application scenarios of the base station and the terminal are not limited in embodiments of this application.

Roles of the base station and the terminal may be relative. For example, a helicopter or an uncrewed aerial vehicle 120i in FIG. 2A may be configured as a mobile base station, and for the terminal 120j accessing the radio access network 100 through 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, for 110a, 120i is also a base station. Therefore, both the base station and the terminal may be collectively referred to as a communication apparatus, 110a and 110b in FIG. 2A may be referred to as a communication apparatus having a function of the base station, and 120a to 120j in FIG. 2A may be referred to as a communication apparatus having a function of the terminal.

Communication between a base station and a terminal, between base stations, or between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as smart grid, industrial control, smart transportation, and smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered with by a signal from a neighboring cell.

The core network in embodiments of this application may include a network device that processes and forwards signaling and data of a user. For example, the core network includes core network devices such as an access and mobility management function (access and mobility management function, AMF), a session management function (session management function, SMF), a user plane gateway, and a location management device. The user plane gateway may be a server that has functions such as mobility management, routing, and forwarding specific to user plane data. The user plane gateway, for example, a serving gateway (serving gateway, SGW), a packet data network gateway (packet data network gateway, PGW), or a user plane network element functional entity (user plane function, UPF), is generally located on a network side. The AMF and the SMF are equivalent to a mobility management entity (mobility management entity, MME) in a long term evolution (long term evolution, LTE) system. The AMF is mainly responsible for admission, and the SMF is mainly responsible for session management. Certainly, the core network may also include other network elements, which are not listed one by one herein.

The location management device has a positioning function. The location management device in embodiments of this application may include a location management function (location management function, LMF) or a location management component (location management component, LMC), or may be a local location management function (local location management function, LLMF) located in the network device, or may be a location server. This is not limited in embodiments of this application. For ease of description, the following embodiments are described by using an example in which the location management device is an LMF.

Based on the content shown in FIG. 2A, **FIG. 2B** is an example of a diagram of an architecture of a communication system to which an embodiment of this application is applicable. The communication system is shown by using a positioning architecture in LTE and NR Rel-16 as an example. As shown in FIG. 2B, involved network elements/modules mainly include three parts: a next generation radio access network (next generation radio access network, NG-RAN), a terminal, and a core network. NG is short for next generation (next generation, NG).

The core network includes a location management function (location management function, LMF), an access and mobility management function (access and mobility management function, AMF), a service location protocol (service location protocol, SLP), an evolved serving mobile location center (evolved serving mobile location centre, E-SMLC), and the like. The LMF is connected to the AMF, and the LMF and the AMF are connected through an NLs interface. A terminal apparatus communicates with a serving base station through a Uu link. An ng-eNB is an LTE base station, a gNB is an NR base station, and the base stations communicate with each other through an Xn interface. The base station communicates with the AMF through an NG control plane (NG control, NG-C) interface, and the AMF is equivalent to a router for communication between the gNB and the LMF. The LMF implements location estimation of the terminal apparatus, and the AMF communicates with the LMF through a network layer signaling (network layer signaling, NLs) interface. The LMF is responsible for supporting different types of location services related to the terminal, including positioning the terminal and transferring assistance data to the terminal. The LMF may perform positioning calculation on the terminal based on a measurement result of another network element. The AMF may receive a terminal-related location service request from a 5th generation core network location service (5th generation core network location services, 5GC LCS) entity, or the AMF may start some location services on behalf of a specific terminal, and forward a location service request to the LMF. After obtaining location information returned by the terminal, the AMF returns the related location information to the 5GC LCS entity.

The NG RAN may include a next generation NodeB (next generation NodeB, gNB), a next generation evolved NodeB (next generation evolved NodeB, ng-eNB), and the like. The gNB and the ng-eNB are connected through an Xn interface, and the LMF and the ng-eNB/gNB are connected through an NG-C interface.

One or more network devices on an NG RAN side configure a resource used to send a reference signal, and send the reference signal to the terminal. The terminal measures a downlink signal such as the reference signal, and feeds back a measurement result to the LMF, to support positioning. It should be understood that the reference signal is used for positioning, and may also be referred to as a positioning reference signal. Therefore, the positioning reference signal may be a PRS, a cell-common reference signal (common reference signal, CRS), a channel state information (channel state information, CSI)-RS, or the like.

A positioning method provided in embodiments of this application may be applied to various communication systems, for example, an LTE system, a 5th generation (5th generation, 5G) system such as NR, and a next generation communication system such as a 6G system. Certainly, the technical solutions in embodiments of this application may also be applied to another communication system, provided that the communication system has a positioning requirement for a terminal. In addition, the communication system is further applicable to a future-oriented communication technology. The systems described in embodiments of this application are intended to describe the technical solutions in embodiments of this application more clearly, and constitute no limitation on the technical solutions provided in embodiments of this application. A person of ordinary skill in the art may learn that, with evolution of a network architecture, the technical solutions provided in embodiments of this application are also applicable to similar technical problems.

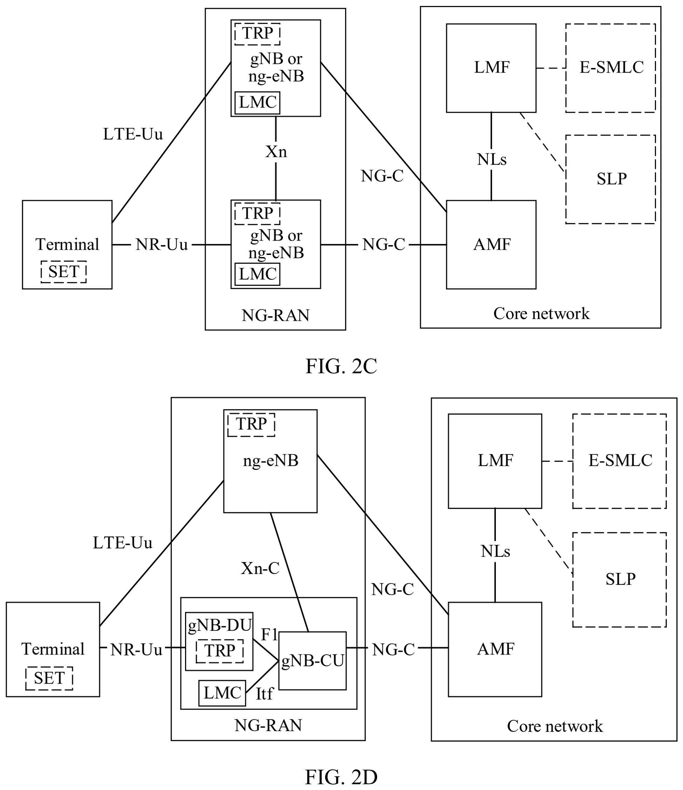

**FIG. 2C** shows a network architecture of another communication system to which an embodiment of this application is applicable. The communication system includes a core network, an NG-RAN, and a terminal. The core network includes network elements/modules such as an LMF, an AMF, a secure user plane location (secure user plane location, SUPL) location platform (SUPL location platform, SLP), and an enhanced serving mobile location center (enhanced serving mobile location centre, E-SMLC). The NG RAN includes network elements/modules such as a gNB and an ng-eNB. For specific functions of the network elements/modules such as the LMF, the AMF, the SLP, the E-SMLC, the gNB, and the ng-eNB and connection relations between the network elements/modules, refer to descriptions of a related part in FIG. 2B above. Details are not described herein again.

A difference from FIG. 2B lies in that, in the network architecture shown in FIG. 2C, an LMC is added to the NG-RAN, and specifically the LMC is disposed inside a base station, for example, disposed in the gNB or the ng-eNB. In this network architecture, the LMC serves as an internal function of the base station. Therefore, no new interface needs to be introduced. The LMC may undertake some functions of the LMF. In this architecture, the gNB may not report a measurement result of a signal used for positioning to the LMF in the core network, thereby reducing signaling overheads and reducing a positioning delay.

**FIG. 2D** shows a network architecture of another communication system to which an embodiment of this application is applicable. As shown in FIG. 2D, the communication system also includes a core network, an NG-RAN, and a terminal. A difference from FIG. 2C lies in that an LMC in the network architecture shown in FIG. 2D serves as an independent logical node in the NG-RAN, and is connected to a base station through a new interface. For example, in FIG. 2D, the LMC is connected to a gNB-CU through an interface Itf. In FIG. 2D, a gNB-DU may be connected to the gNB-CU through an F1 interface.

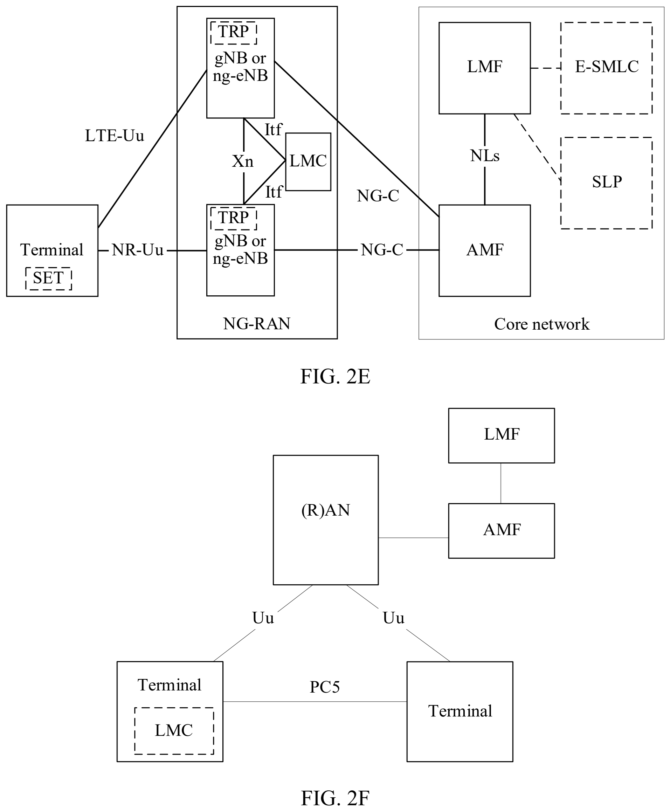

**FIG. 2E** shows a network architecture of another communication system to which an embodiment of this application is applicable. As shown in FIG. 2E, the communication system also includes a core network, an NG-RAN, and a terminal. An LMC serves as an independent logical node in the NG-RAN. A difference from FIG. 2D lies in that the LMC may be connected to a plurality of base stations through new interfaces in FIG. 2E. In FIG. 2E, an example in which the LMC is connected to two base stations is used. In a specific implementation, the LMC may alternatively be connected to more base stations.

**FIG. 2F** shows a network architecture of another communication system to which an embodiment of this application is applicable. As shown in FIG. 2F, the communication system includes a (R)AN, an AMF, an LMF, and a plurality of terminals. The plurality of terminals may be connected to each other through PC5, and a reference signal may be transmitted between two terminals. One terminal may be considered as a reference signal transmitting end, and one or more other terminals may be considered as a reference signal receiving end. The reference signal receiving end may measure a received reference signal to obtain measurement information, and the measurement information may be used for positioning. In another possible implementation, the LMC may be integrated into the terminal.

It should be understood that FIG. 2B, FIG. 2C, FIG. 2D, FIG. 2E, and FIG. 2F are examples for describing the communication systems to which embodiments of this application are applicable, and do not specifically limit types, quantities, connection manners, and the like of network elements included in the communication systems to which this application is applicable. In addition, the network elements/modules shown by dashed lines in FIG. 2B, FIG. 2C, FIG. 2D, FIG. 2E, and FIG. 2F are not mandatory but optional. For example, the E-SMLC or the SLP is not mandatory. Alternatively, the network elements/modules shown by dashed lines are in another existence form. For example, the gNB or the ng-eNB is also referred to as a transmission reception point (transmission reception point, TRP) in some embodiments, and the terminal is referred to as an SUPL enabled terminal (SUPL enabled terminal, SET) in some embodiments, where SUPL is short for secure user plane location (secure user plane location, SUPL).

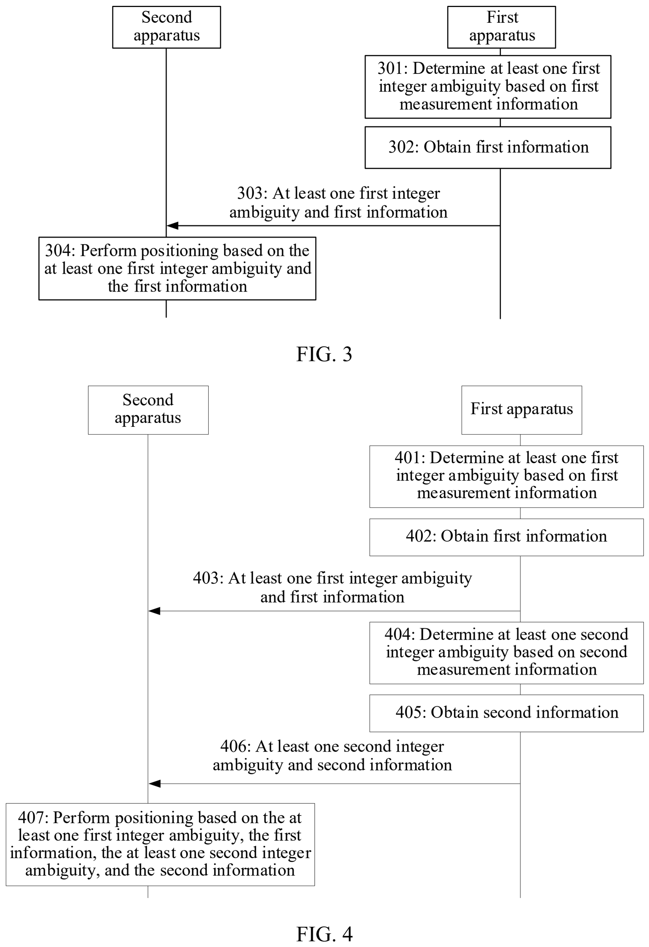

Based on the embodiments shown in FIG. 2A, FIG. 2B, FIG. 2C, FIG. 2D, FIG. 2E, and FIG. 2F and the foregoing other content, **FIG. 3** is an example of a schematic flowchart of a positioning method according to an embodiment of this application.

For ease of understanding, FIG. 3 is described from a perspective of interaction. A first apparatus in FIG. 3 may be the terminal, a chip system inside the terminal, the network device, or a chip system inside the network device in FIG. 2A, FIG. 2B, FIG. 2C, FIG. 2D, FIG. 2E, or FIG. 2F. A second apparatus in FIG. 3 may be the location management device in FIG. 2A, FIG. 2B, FIG. 2C, FIG. 2D, FIG. 2E, or FIG. 2F or a chip system in the location management device. The first apparatus reports a first integer ambiguity and first information to the second apparatus, so that the second apparatus performs positioning.

Refer to **FIG. 3.** The method includes the following steps.

**Step 301:** The first apparatus determines at least one first integer ambiguity based on first measurement information.

In this embodiment of this application, the first measurement information may be obtained by the first apparatus by measuring at least one first reference signal (for differentiation, a reference signal used to determine the first measurement information is referred to as a first reference signal in this embodiment of this application), or may be received by the first apparatus from another apparatus. For differentiation, an apparatus for measuring a reference signal is referred to as a measurement apparatus in this embodiment of this application. The measurement apparatus may be the first apparatus, or may not be the first apparatus (the measurement apparatus may send the first measurement information to the first apparatus after obtaining the first measurement information). Alternatively, there are a plurality of measurement apparatuses, and the plurality of measurement apparatuses include the first apparatus and another apparatus. Some or all content of the first measurement information may include information directly obtained by the measurement apparatus by measuring the at least one reference signal, or may include information obtained by the measurement apparatus by further processing the information. In the solution provided in this embodiment of this application, a more accurate integer ambiguity (for example, a third integer ambiguity) obtained based on the first measurement information may be used for positioning, for example, may be used to position the first apparatus, or may be used to position another apparatus (the another apparatus may include, for example, a transmitting end or a measurement end of the first reference signal).

The first measurement information includes time measurement information and/or carrier phase measurement information.

The time measurement information in this embodiment of this application includes at least one of the following: a TOA, an RTOA, an RSTD, a receive-transmit time difference, or the like.

The carrier phase measurement information in this embodiment of this application includes at least one of the following: an RSCP, an RSCPD, a multi-subband carrier phase, a multi-subband carrier phase difference, a multi-frequency carrier phase, a multi-frequency carrier phase difference, or the like.

The following describes information, for example, at least one of the following information A1, information A2, information A3, information A4, or information A5, that may be included in the carrier phase measurement information in the first measurement information.

A third apparatus and a sixth apparatus in the following implementations may be apparatuses configured to receive a reference signal, and may be configured to measure a reference signal. A fourth apparatus and a fifth apparatus may be apparatuses configured to send a reference signal. Any one of the third apparatus, the fourth apparatus, the fifth apparatus, and the sixth apparatus may be the terminal, a chip system inside the terminal, the network device, or a chip system inside the network device in FIG. 2A, FIG. 2B, FIG. 2C, FIG. 2D, FIG. 2E, or FIG. 2F.

**Information A1:** information indicating a first phase.

The information indicating the first phase may include the first phase (or referred to as a first phase value or first phase information).

The first phase is obtained by the third apparatus by measuring a third reference signal (the at least one first reference signal includes the third reference signal) from the fourth apparatus.

In this embodiment of this application, the third apparatus may be the first apparatus. Alternatively, the third apparatus and the first apparatus are two different apparatuses. When the third apparatus and the first apparatus are two different apparatuses, the third apparatus may send, to the first apparatus, the information indicating the first phase.

When the first measurement information includes the information indicating the first phase, because the information indicating the first phase may include more measurement information, the first apparatus may perform positioning based on the more measurement information, thereby improving positioning accuracy.

**Information A2:** information indicating a first phase difference.

The first phase difference is obtained based on the first phase and a second phase (for example, the first phase difference is a difference between the first phase and the second phase). The second phase is obtained by the third apparatus by measuring a fourth reference signal (the at least one first reference signal includes the fourth reference signal) from the fifth apparatus.

The information indicating the first phase difference includes the first phase difference, or the information indicating the first phase difference includes the first phase and the second phase.

When the third apparatus and the first apparatus are two different apparatuses, the third apparatus may send, to the first apparatus, the information indicating the first phase difference.

In this embodiment of this application, when the first measurement information includes the information indicating the first phase difference, some errors such as a random initial phase error or a synchronization error of a reference signal may be eliminated in a process of determining the first integer ambiguity based on the first phase difference.

For example, a plurality of base stations send reference signals to one terminal, and the terminal measures the reference signals from the plurality of base stations, to obtain the first phase and the second phase. Alternatively, one terminal sends a reference signal to a plurality of base stations, and the plurality of base stations separately measure the reference signal from the terminal, to obtain the first phase and the second phase. In the two scenarios, because an error of the terminal is fixed, when the first integer ambiguity is calculated by using a difference between the first phase and the second phase, an error on a terminal side may be eliminated, for example, an error of measuring a plurality of reference signals on the terminal side may be eliminated, or a random initial phase error of sending a reference signal on the terminal side may be eliminated.

For another example, a plurality of terminals send reference signals to one base station, and the base station measures the reference signals from the plurality of terminals, to obtain the first phase and the second phase. Alternatively, one base station sends a reference signal to a plurality of terminals, and the plurality of terminals separately measure the reference signal from the base station, to obtain the first phase and the second phase. In the two scenarios, because an error of the base station is fixed, when the first integer ambiguity is calculated by using a difference between the first phase and the second phase, an error on a base station side may be eliminated, for example, an error of measuring a plurality of reference signals on the base station side may be eliminated, or a random initial phase error of sending a reference signal on the base station side may be eliminated.

**Information A3:** information indicating a second phase difference.

The second phase difference is obtained based on the first phase and a third phase (for example, the second phase difference is a difference between the first phase and the third phase). The third phase is obtained by the sixth apparatus by measuring the third reference signal from the fourth apparatus.

The information indicating the second phase difference includes the second phase difference, or the information indicating the second phase difference includes the first phase and/or the third phase.

In this embodiment of this application, the sixth apparatus and the third apparatus are two different apparatuses. The sixth apparatus may send, to the first apparatus, information indicating the third phase, and the third apparatus may send, to the first apparatus, the information indicating the first phase. Alternatively, the sixth apparatus sends, to the third apparatus, the information indicating the third phase, and the third apparatus sends, to the first apparatus, the information indicating the second phase difference.

In this embodiment of this application, when the first measurement information includes the information indicating the second phase difference, in a process of determining the first integer ambiguity based on the second phase difference, an error caused by a reference signal transmitting end may be eliminated, or an error caused by a reference signal receiving end may be eliminated, for example, a random initial phase error or a synchronization error of a reference signal may be eliminated, thereby further improving positioning accuracy.

**Information A4:** information indicating a third phase difference.

The third phase difference is obtained based on the first phase difference and a fourth phase difference (for example, the third phase difference is a difference between the first phase and a fourth phase). The fourth phase difference is obtained based on the fourth phase and a fifth phase (for example, the fourth phase difference is a difference between the fourth phase and the fifth phase). The fourth phase is obtained by the sixth apparatus by measuring the third reference signal from the fourth apparatus. The fifth phase is obtained by the sixth apparatus by measuring the fourth reference signal from the fifth apparatus.

The information indicating the third phase difference includes the third phase difference; or the information indicating the third phase difference includes the information indicating the first phase difference and information indicating the fourth phase difference. The information indicating the fourth phase difference includes the fourth phase difference, or includes the fourth phase and the fifth phase.

In this embodiment of this application, when the first measurement information includes the information indicating the third phase difference, in a process of determining the first integer ambiguity based on the third phase difference, an error caused by a reference signal transmitting end may be eliminated, or an error caused by a reference signal receiving end may be eliminated, for example, a random initial phase error or a synchronization error of a reference signal may be eliminated, thereby further improving positioning accuracy.

In a possible implementation, the third apparatus and the sixth apparatus are terminals or chip systems inside terminals, and the fourth apparatus and the fifth apparatus are network devices (for example, base stations) or chip systems inside network devices (for example, base stations). The sixth apparatus may communicate with the third apparatus, and the sixth apparatus may send, to the third apparatus, the information indicating the fourth phase difference, so that the third apparatus calculates the third phase difference based on the fourth phase difference and the first phase difference. The third apparatus may be the first apparatus; or the third apparatus and the first apparatus are two different apparatuses, and the third apparatus may send, to the first apparatus, the information indicating the third phase difference. In this solution, the first apparatus may determine the first integer ambiguity based on a phase difference between phase differences, so that a degree of accuracy of the first integer ambiguity can be improved, thereby improving positioning accuracy.

In another possible implementation, the third apparatus and the sixth apparatus are network devices (for example, base stations) or chip systems inside network devices (for example, base stations), and the fourth apparatus and the fifth apparatus are terminals or chip systems inside terminals. The sixth apparatus and the third apparatus may separately communicate with the first apparatus. For example, the first apparatus is a base station, and the third apparatus and the sixth apparatus are different TRPs in the base station. The sixth apparatus may send, to the first apparatus, the information indicating the fourth phase difference. The third apparatus may send, to the first apparatus, the information indicating the first phase difference. The first apparatus calculates the third phase difference based on the first phase difference and the fourth phase difference. In this solution, the first apparatus may determine the first integer ambiguity based on a phase difference between phase differences, so that a degree of accuracy of the first integer ambiguity can be improved, thereby improving positioning accuracy.

**Information A5:** information indicating the fourth phase difference.

The fourth phase difference is determined based on an obtained phase arrival error (phase arrival error, PAE), and the fourth phase difference is further determined based on the first phase difference or the first phase. For example, the fourth phase difference is a difference between the PAE and the first phase, or the fourth phase difference is a difference between the PAE and the first phase difference.

The information indicating the fourth phase difference includes the fourth phase difference; or the information indicating the fourth phase difference includes the information indicating the first phase difference and the information indicating the first phase.

The first apparatus may receive the PAE from another apparatus (for example, a location management device). The PAE may be used to calibrate phase deviations of different reference signals. For example, UE and/or a positioning reference station (positioning reference unit, PRU) receive/receives a reference signal from one or more base stations, and the UE and/or the PRU measure/measures the reference signal, to obtain the first phase or the first phase difference. The PRU in this embodiment of this application may be understood as an apparatus, and the apparatus may perform some operations related to communication, for example, may perform some operations related to a positioning procedure. For example, the PRU may measure a received reference signal. For another example, the PRU may send a reference signal. The PRU may be understood as a terminal or a chip apparatus inside a terminal. Because clocks of a plurality of base stations may not be synchronized, there is a specific phase deviation between reference signals sent by different base stations, and the PAE may be used to calibrate the phase deviation between the plurality of reference signals sent by the different base stations. Because the first apparatus determines the first integer ambiguity with reference to the PAE and the first phase (or the first phase difference), this solution can improve a degree of accuracy of the first integer ambiguity, thereby improving positioning accuracy.

If the first apparatus and the third apparatus are a same apparatus, the first apparatus may determine, without receiving carrier phase measurement information (a phase and/or a phase difference) of another apparatus, the first integer ambiguity based on the PAE, and the first phase and/or the first phase difference obtained through measurement by the first apparatus, so that a degree of accuracy of the first integer ambiguity can be improved, positioning accuracy can be improved, a procedure of interaction between the first apparatus and another apparatus can be reduced, and complexity of the solution can be reduced while positioning accuracy is improved.

In this embodiment of this application, the foregoing information A1, information A2, information A3, information A4, and information A5 are several examples of information that may be included in the first measurement information. The carrier phase measurement information in the first measurement information may alternatively include other information, for example, may include a difference between more than two phase differences.

For example, UE #1 measures a frequency #1 and a frequency #2 of a reference signal #1 of a base station #1, to obtain a phase #1 and a phase #2. A difference between the phase #1 and the phase #2 is considered as a phase difference #1.

The UE #1 measures a frequency #1 and a frequency #2 of a reference signal #2 of a base station #2, to obtain a phase #3 and a phase #4. A difference between the phase #3 and the phase #4 is considered as a phase difference #2. A difference between the phase difference #1 and the phase difference #2 is considered as a phase difference #3.

A PRU #1 measures the frequency #1 and the frequency #2 of the reference signal #1 of the base station #1, to obtain a phase #5 and a phase #6. A difference between the phase #5 and the phase #6 is considered as a phase difference #4.

A difference between the phase difference #3 and the phase difference #4 is considered as a phase difference #5.

The carrier phase measurement information in the first measurement information may include information indicating the phase difference #5. It can be learned that, in this example, the carrier phase measurement information in the first measurement information may include a difference between three phase differences. Therefore, impact of an error on a degree of accuracy of the first integer ambiguity can be further reduced, and the degree of accuracy of the first integer ambiguity is improved, thereby improving positioning accuracy. Similarly, the carrier phase information in the first measurement information may include a difference between more phase differences, and details are not described again.

**Step 302:** The first apparatus obtains the first information.

Step 302 has a plurality of possible implementations. In a possible implementation, the first apparatus determines the first information based on the first measurement information and the at least one first integer ambiguity.

The first information indicates reliability of the at least one first integer ambiguity.

The first information in this embodiment of this application may indicate reliability of one or more first integer ambiguities.

There may be a plurality of specific forms of the first information. For example, the first information includes information indicating a likelihood of accuracy of the at least one first integer ambiguity. In this embodiment of this application, the likelihood (likelihood) may be replaced with a probability, a degree, or the like.

The first information may include a soft bit value. The soft bit value is understood as a bit value carried in one or more bits. The bit value may be 1 or 0, or may be a value other than 1 and 0, for example, a number between 0 and 1. For example, the first information occupies one or more bits; and when a bit value of these bits is 0.9, the first information indicates that the likelihood of accuracy of the at least one first integer ambiguity is 90% (which is alternatively understood as that a probability of accuracy of the at least one first integer ambiguity is 90%); or when a bit value of these bits is 0.7, the first information indicates that the likelihood of accuracy of the at least one first integer ambiguity is 70% (which is alternatively understood as that a probability of accuracy of the at least one first integer ambiguity is 70%).

Because the soft bit value may be a decimal, the soft bit value may more flexibly and accurately indicate a degree of accuracy of a first integer ambiguity. Therefore, the second apparatus may determine a more accurate integer ambiguity with reference to the first information, thereby improving positioning accuracy and positioning robustness. For example, the second apparatus may perform positioning based on an integer ambiguity with a relatively large (or maximum) likelihood. In addition, because the first information is a soft bit value, a positioning apparatus may determine a degree of accuracy of a first integer ambiguity, and then may use each first integer ambiguity based on the degree of accuracy, to increase a quantity of first integer ambiguities that can be used. For some scenarios with a relatively small quantity of first integer ambiguities, in the solution in this embodiment of this application, location information of an apparatus that needs to be positioned may be determined based on the first integer ambiguity, and a degree of accuracy of the location information may also be determined based on the first information, so that positioning robustness can be improved.

For another example, the first information may be information indicating that the at least one first integer ambiguity is reliable (or unreliable). For example, the first information occupies one bit; and when a bit value of the bit is 1, the first information indicates that the at least one first integer ambiguity is reliable; or when a bit value of the bit is 0, the first information indicates that the at least one first integer ambiguity is unreliable. Therefore, the second apparatus may determine a more accurate integer ambiguity with reference to the first information. For example, the second apparatus may perform positioning based on an integer ambiguity with a relatively large (or maximum) likelihood, thereby improving positioning accuracy.

In a possible implementation, the first apparatus may determine an integer ambiguity set based on measurement information. In this embodiment of this application, the integer ambiguity set may include one or more integer ambiguities. For differentiation, an integer ambiguity set determined by the first apparatus based on the first measurement information is referred to as a first integer ambiguity set in this embodiment of this application. In this embodiment of this application, the integer ambiguity set (for example, the first integer ambiguity set and a subsequent second integer ambiguity set) may be replaced with an integer ambiguity range, a set of integer ambiguities, an integer ambiguity group, or the like.

In this embodiment of this application, the at least one first integer ambiguity obtained by the first apparatus may include an integer ambiguity in the first integer ambiguity set, and/or an integer ambiguity outside the first integer ambiguity set (the integer ambiguity outside the first integer ambiguity set may be determined based on the first integer ambiguity set). The following describes two possible implementations by using Implementation B1 and Implementation B2 below.

**Implementation B1:** The at least one first integer ambiguity may include an integer ambiguity in the first integer ambiguity set.

For example, the first integer ambiguity set includes two integer ambiguities: N#1 and N#2, where a value of N#1 is 6, and a value of N#2 is 10. In a possible implementation, the first apparatus calculates that a likelihood of accuracy of N#1 and N#2 is 90% (for a specific calculation method, reference may be made to subsequent descriptions, and details are not described herein).

In a possible implementation, the at least one first integer ambiguity obtained by the first apparatus in step 302 includes the value of N#1 and the value of N#2 (that is, the at least one first integer ambiguity obtained by the first apparatus is the two integer ambiguities included in the first integer ambiguity set), and the first information obtained by the first apparatus is 90%. There is one piece of first information information, and the one piece of first information indicates a likelihood of accuracy of a plurality of integer ambiguities (N#1 and N#2). When the first apparatus reports the first information, because the one piece of first information indicates the likelihood of accuracy of the plurality of integer ambiguities, this solution can reduce signaling overheads.

In another possible implementation, the first apparatus determines a likelihood of accuracy of N#1 (or N#2) (that is, a likelihood of accuracy of a single integer ambiguity) based on the likelihood of accuracy of N#1 and N#2. For example, the likelihood of accuracy of N#1 and N#2 is 90%, and then the first apparatus may determine that the likelihood of accuracy of N#1 (or N#2) is 90% or another value (for example, 91% or 89%) (for example, by adding a preset value to or subtracting a preset value from 90%). Then, in step 302, the at least one first integer ambiguity obtained by the first apparatus includes the value of N#1 (or N#2) (that is, the at least one first integer ambiguity obtained by the first apparatus is one integer ambiguity included in the first integer ambiguity set), and the first information obtained by the first apparatus is 90% (or 91% or 89%). There is one piece of first information, and the one piece of first information indicates the likelihood of accuracy of N#1 (or N#2). Alternatively, the first apparatus obtains N#1 and N#2, and obtains two pieces of first information, where one piece of first information indicates the likelihood of accuracy of N#1, and the other piece of first information indicates the likelihood of accuracy of N#2. In this solution, each integer ambiguity may correspond to one likelihood. This solution is relatively flexible, and a degree of accuracy of each integer ambiguity can be more accurately determined in this solution.

**Implementation B2:** A first integer ambiguity in the at least one first integer ambiguity may be determined based on an integer ambiguity in the first integer ambiguity set.

In a possible implementation, some or all of the at least one first integer ambiguity may include an integer ambiguity outside the first integer ambiguity set.

For example, the first integer ambiguity set includes two integer ambiguities: N#1 and N#2, where a value of N#1 is 6, and a value of N#2 is 10. In a possible implementation, the first apparatus calculates that a likelihood of accuracy of N#1 and N#2 is 90% (for a specific calculation method, reference may be made to subsequent descriptions, and details are not described herein).

N#1 corresponds to a frequency #1, which may also be understood as that N#1 is obtained based on a measurement result of a reference signal of the frequency #1. N#2 corresponds to a frequency #2, which may also be understood as that N#2 is obtained based on a measurement result of a reference signal of the frequency #2. A center frequency of the frequency #1 and the frequency #2 is denoted as a frequency #3. An integer ambiguity N#3 corresponding to the frequency #3 is calculated based on N#1 and N#2 (for a calculation method of N#3, reference may be made to subsequent descriptions, and details are not described herein). N#3 does not belong to the first integer ambiguity set.

The first apparatus determines a likelihood of accuracy of N#3 based on the likelihood of accuracy of N#1 and N#2. For example, the likelihood of accuracy of N#1 and N#2 is 90%, and then the first apparatus may determine that the likelihood of accuracy of N#3 is 90% or another value (for example, 91% or 89%) (for example, by adding a preset value to or subtracting a preset value from 90%). Then, in step 302, the at least one first integer ambiguity obtained by the first apparatus includes a value of N#3 (that is, the at least one first integer ambiguity obtained by the first apparatus includes an integer ambiguity outside the first integer ambiguity set), and the first information obtained by the first apparatus is 90% (or 91% or 89%). There is one piece of first information, and the one piece of first information indicates the likelihood of accuracy of N#3. N#3 may be considered as an integer ambiguity corresponding to a center frequency. The center frequency may be considered as a center frequency of a bandwidth. The bandwidth includes a frequency #1 and a frequency #2. The frequency #1 and the frequency #2 may be considered as frequencies at two ends of the bandwidth. The bandwidth may be considered as a bandwidth occupied by one or more first reference signals. Compared with the frequency #1 and the frequency #2, the center frequency corresponds to more accurate phase information. Therefore, positioning based on the integer ambiguity corresponding to the center frequency can further improve positioning accuracy and robustness.

**Step 303:** The first apparatus sends the at least one first integer ambiguity and the first information.

Correspondingly, the second apparatus receives the at least one first integer ambiguity and the first information.

The first integer ambiguity and the first information may be sent by using one or more messages. For example, the first integer ambiguity and the first information may be carried in an LTE positioning protocol (LTE positioning protocol, LPP) provide location information (LPP provide location information) message. For another example, the first integer ambiguity and the first information may be carried in an LPP provide location information NRPPa measurement response (NRPPa measurement response) message. NRPPa is short for new radio positioning protocol annex (new radio positioning protocol annex, NRPPa).

**Step 304:** The second apparatus performs positioning based on the at least one first integer ambiguity and the first information.

There are a plurality of manners in which the second apparatus performs positioning with assistance of the first information. For example, a more accurate integer ambiguity may be selected with assistance of the first information, thereby improving positioning accuracy. Alternatively, the second apparatus provides, with assistance of the first information, information indicating a degree of accuracy of location information (for example, location information of a terminal that needs to be positioned). For example, when the second apparatus determines that reliability of the first integer ambiguity and a second integer ambiguity indicated by the first information is relatively high, reliability of location information obtained by the second apparatus based on the first integer ambiguity is also relatively high, and the second apparatus may provide one piece of information, where the information indicates that reliability of the location information is relatively high.

In a possible implementation, the second apparatus determines the third integer ambiguity based on the at least one first integer ambiguity and the first information, where the third integer ambiguity is used for positioning.

In this solution, the second apparatus may determine the third integer ambiguity with reference to the first information, so that accuracy of the third integer ambiguity can be improved, thereby further improving positioning accuracy.

In this embodiment of this application, there are a plurality of solutions for determining the third integer ambiguity. For example, the third integer ambiguity may have a highest (or relatively high) likelihood of accuracy in integer ambiguities (including the at least one first integer ambiguity) obtained by the first apparatus. Alternatively, the third integer ambiguity may be an average value (or a weighted average value) or the like of a plurality of integer ambiguities with relatively high likelihoods of accuracy in integer ambiguities (including the at least one first integer ambiguity) obtained by the first apparatus.

In the solution provided in this embodiment of this application, the more accurate third integer ambiguity obtained based on the first integer ambiguity and the first information may be used for positioning. The third integer ambiguity may be used to position the first apparatus, or may be used to position another apparatus (the another apparatus may include, for example, the transmitting end or the measurement end of the first reference signal).

Based on the embodiments shown in FIG. 2A, FIG. 2B, FIG. 2C, FIG. 2D, FIG. 2E, FIG. 2F, and FIG. 3 and the foregoing other content, **FIG. 4** is an example of a schematic flowchart of a positioning method according to an embodiment of this application. FIG. 4 may be considered as an extended embodiment of FIG. 3. In the embodiment shown in FIG. 4, the first apparatus may further obtain at least one second integer ambiguity and second information, where the at least one second integer ambiguity, the first information, the at least one second integer ambiguity, and the second information may be used to determine a third integer ambiguity.

FIG. 4 is described from a perspective of interaction. For descriptions of the first apparatus and the second apparatus in FIG. 4, refer to the related descriptions in FIG. 3. Details are not described again.

Refer to **FIG. 4.** The method includes the following steps.

**Step 401:** The first apparatus determines at least one first integer ambiguity based on first measurement information.

For content of step 401, refer to the content of step 301. Details are not described again.

**Step 402:** The first apparatus obtains first information.

For content of step 402, refer to the content of step 302. Details are not described again.

**Step 403:** The first apparatus sends the at least one first integer ambiguity and the first information.

For content of step 403, refer to the content of step 303. Details are not described again.

**Step 404:** The first apparatus determines at least one second integer ambiguity based on second measurement information.

In this embodiment of this application, the second measurement information may be obtained by the first apparatus by measuring at least one second reference signal (for differentiation, a reference signal used to determine the second measurement information is referred to as a second reference signal in this embodiment of this application), or may be received by the first apparatus from another apparatus.

The second measurement information includes time measurement information and/or carrier phase measurement information. For related content of the time measurement information and/or the carrier phase measurement information, refer to the foregoing descriptions. Details are not described again.

The carrier phase measurement information in the second measurement information may include information indicating a phase and/or information indicating a phase difference. The phase difference indicated by the information indicating the phase difference may be a difference between two phases, or may be a difference between two (or more than two) phase differences. For related content, refer to the foregoing content about the first measurement information.

The second measurement information may include, for example, at least one of the following information C1, information C2, information C3, information C4, or information C5. For a manner in which the first apparatus obtains at least one of the following information C1, information C2, information C3, information C4, or information C5, refer to the foregoing manner in which the first apparatus obtains at least one of the information A1, the information A2, the information A3, the information A4, or the information A5. Details are not described again.

For related descriptions of a third apparatus, a sixth apparatus, a fourth apparatus, and a fifth apparatus in the following implementations, refer to the related descriptions of step 301. Details are not described again.

**Information C1:** information indicating a sixth phase.

The information indicating the sixth phase may include the sixth phase.

The sixth phase is obtained by the third apparatus by measuring a fifth reference signal (the at least one second reference signal includes the fifth reference signal) from the fourth apparatus.

For a manner in which the first apparatus obtains the information C1, refer to the foregoing manner in which the first apparatus obtains the information A1. Details are not described again.

**Information C2:** information indicating a fifth phase difference.

The fifth phase difference is obtained based on the sixth phase and a seventh phase (for example, the fifth phase difference is a difference between the sixth phase and the seventh phase). The seventh phase is obtained by the third apparatus by measuring a sixth reference signal (the at least one second reference signal includes the sixth reference signal) from the fifth apparatus.

The information indicating the fifth phase difference includes the fifth phase difference, or the information indicating the fifth phase difference includes the sixth phase and the seventh phase.

For a manner in which the first apparatus obtains the information C2, refer to the foregoing manner in which the first apparatus obtains the information A2. Details are not described again.

**Information C3:** information indicating a sixth phase difference.

The sixth phase difference is obtained based on the sixth phase and an eighth phase (for example, the sixth phase difference is a difference between the sixth phase and the eighth phase). The eighth phase is obtained by the sixth apparatus by measuring the fifth reference signal from the fourth apparatus.

The information indicating the sixth phase difference includes the sixth phase difference, or the information indicating the sixth phase difference includes the sixth phase and/or the eighth phase.

For a manner in which the first apparatus obtains the information C3, refer to the foregoing manner in which the first apparatus obtains the information A3. Details are not described again.

**Information C4:** information indicating a seventh phase difference.

The seventh phase difference is obtained based on the fifth phase difference and an eighth phase difference (for example, the seventh phase difference is a difference between the sixth phase and a ninth phase). The eighth phase difference is obtained based on the ninth phase and a tenth phase (for example, the eighth phase difference is a difference between the ninth phase and the tenth phase). The ninth phase is obtained by the sixth apparatus by measuring the fifth reference signal from the fourth apparatus. The tenth phase is obtained by the sixth apparatus by measuring the sixth reference signal from the fifth apparatus.

The information indicating the seventh phase difference includes the seventh phase difference; or the information indicating the seventh phase difference includes the information indicating the fifth phase difference and information indicating the eighth phase difference. The information indicating the eighth phase difference includes the eighth phase difference, or includes the ninth phase and the tenth phase.

For a manner in which the first apparatus obtains the information C4, refer to the foregoing manner in which the first apparatus obtains the information A4. Details are not described again.

**Information C5:** information indicating the eighth phase difference.

The eighth phase difference is determined based on an obtained phase arrival error (phase arrival error, PAE), and the eighth phase difference is further determined based on the fifth phase difference or the sixth phase. For example, the eighth phase difference is a difference between the PAE and the sixth phase, or the eighth phase difference is a difference between the PAE and the fifth phase difference.

The information indicating the eighth phase difference includes the eighth phase difference; or the information indicating the eighth phase difference includes the information indicating the fifth phase difference and the information indicating the sixth phase.

For a manner in which the first apparatus obtains the information C5, refer to the foregoing manner in which the first apparatus obtains the information A5. Details are not described again.

In this embodiment of this application, one first reference signal in at least one first reference signal (the at least one first reference signal includes, for example, a third reference signal and a fourth reference signal) and one second reference signal in the at least one second reference signal (the at least one second reference signal includes, for example, the fifth reference signal and the sixth reference signal) may be a same reference signal (or different reference signals). For example, the third reference signal and the fifth reference signal are a same reference signal (or different reference signals). For another example, the fourth reference signal and the sixth reference signal are a same reference signal (or different reference signals).

For example, the third reference signal and the fifth reference signal are two reference signals. The third reference signal and the fifth reference signal have a same transmitting end. The transmitting end respectively sends the third reference signal and the fifth reference signal at two frequencies. The third reference signal and the fifth reference signal are DS-RSs. The transmitting end sends a resource at the two ends but does not send a resource in the middle. The third reference signal and the fifth reference signal have a same time domain resource. This can increase transmit power of the third reference signal and the fifth reference signal, thereby improving accuracy of a measurement result obtained by a measurement end through measurement, and further improving positioning accuracy.

For another example, the third reference signal and the fifth reference signal are a same reference signal. The reference signal covers two frequencies, and a measurement end performs measurement at the two frequencies, to obtain two pieces of phase information. In this solution, a network apparatus may configure only one reference signal, and the configuration is relatively simple and easy to implement.

In another possible implementation, the first measurement information is obtained by measuring a first frequency of the at least one first reference signal, the second measurement information is obtained by measuring a second frequency of the at least one second reference signal, and the first frequency is different from the second frequency.

For example, the first measurement information is obtained based on measurement information of a first frequency of the third reference signal and measurement information of a first frequency of the fourth reference signal, and the second measurement information is obtained based on measurement information of a second frequency of the third reference signal (the third reference signal and the fifth reference signal are a same reference signal) and measurement information of a second frequency of the fourth reference signal (the fourth reference signal and the sixth reference signal are a same reference signal).

For example, a reference signal transmitting end may send a reference signal in an entire bandwidth. The reference signal may be referred to as a first reference signal, or may be referred to as a second reference signal, that is, the first reference signal and the second reference signal are a same reference signal.

For another example, a reference signal transmitting end may send a reference signal at two ends (namely, a first frequency and a second frequency) of an entire bandwidth but does not send a signal in the middle, which may also be understood as that the reference signal occupies a partial bandwidth at the two ends of the entire bandwidth. The reference signal may be referred to as a first reference signal, or may be referred to as a second reference signal, that is, the first reference signal and the second reference signal are a same reference signal. Alternatively, a reference signal corresponding to a first frequency may be referred to as a first reference signal, and a reference signal corresponding to a second frequency may be referred to as a second reference signal.

**Step 405:** The first apparatus obtains the second information.

Step 405 has a plurality of possible implementations. In a possible implementation, the first apparatus determines the second information based on the second measurement information and the at least one second integer ambiguity.

The second information indicates reliability of the at least one second integer ambiguity.

The second information in this embodiment of this application may indicate reliability of one or more second integer ambiguities.

There may be a plurality of specific forms of the second information. For example, the second information includes information indicating a likelihood of accuracy of the at least one second integer ambiguity. For a form of the second information, refer to the related content of the first information. A difference lies in that the first information indicates reliability of the first integer ambiguity, and the second information indicates reliability of the second integer ambiguity. Content is similar, and details are not described again.

For differentiation, an integer ambiguity set determined by the first apparatus based on the second measurement information is referred to as a second integer ambiguity set in this embodiment of this application. For related content of the second integer ambiguity set, refer to the related descriptions of the first integer ambiguity set. Details are not described again. Similarly, the at least one second integer ambiguity obtained by the first apparatus may include an integer ambiguity in the second integer ambiguity set, and/or an integer ambiguity outside the second integer ambiguity set (the integer ambiguity outside the second integer ambiguity set may be determined based on the second integer ambiguity set). For a related implementation, refer to Implementation B1 and Implementation B2 above. Details are not described again.

In a possible implementation, the second information and the first information in this embodiment of this application are same information; and the information indicates a likelihood of accuracy of the at least one first integer ambiguity and the at least one second integer ambiguity; or the information indicates a likelihood of accuracy of the at least one first integer ambiguity and indicates a likelihood of accuracy of the at least one second integer ambiguity.

For step 403 and step 406, this embodiment of this application provides an implementation for determining the first information and the second information. In this implementation, the first information and the second information are determined based on a first distance value and a second distance value.

In this embodiment of this application, the first distance value may be understood as a distance corresponding to the first frequency of the first reference signal, or may be understood as a distance that a reference signal on the first frequency of the first reference signal passes through from a transmitting end to a receiving end (a reference signal receiving end). In this embodiment of this application, the second distance value may be understood as a distance corresponding to the second frequency of the second reference signal, or may be understood as a distance that a reference signal on the second frequency of the second reference signal passes through from a transmitting end to a receiving end (a reference signal receiving end). In this embodiment of this application, the reference signal receiving end may be the first apparatus, or may not be the first apparatus.

A degree of proximity between the first distance value and the second distance value is positively correlated with the likelihood of accuracy of the at least one first integer ambiguity. For example, if the first distance value is closer to the second distance value, it indicates that the likelihood of accuracy of the first integer ambiguity is higher. For another example, a larger difference between the first distance value and the second distance value indicates a smaller likelihood of accuracy of the first integer ambiguity. Alternatively, an association relationship between the degree of proximity between the first distance value and the second distance value (for example, a range of the difference between the first distance value and the second distance value) and the likelihood of accuracy of the first integer ambiguity may be set. A larger maximum value of the difference range indicates a larger likelihood of accuracy of the first integer ambiguity, and vice versa. The degree of proximity between the first distance value and the second distance value is positively correlated with the likelihood of accuracy of the at least one second integer ambiguity. For related content, refer to the foregoing descriptions of the likelihood of accuracy of the at least one second integer ambiguity. Details are not described again.

The likelihood of accuracy of the second integer ambiguity may be equal to the likelihood of accuracy of the first integer ambiguity. The first information and the second information are same information. The first information (or the second information) indicates the likelihood of accuracy of the first integer ambiguity and indicates the likelihood of accuracy of the second integer ambiguity.

In another possible implementation, a degree of proximity between the first distance value and the second distance value is positively correlated with the likelihood of accuracy of the first integer ambiguity and the second integer ambiguity. It may also be understood that a plurality of integer ambiguities (the plurality of integer ambiguities include one first integer ambiguity and one second integer ambiguity) correspond to one likelihood, and the likelihood indicates a likelihood of accuracy corresponding to a combination of the plurality of integer ambiguities. It may also be understood that the first information and the second information are same information, and the information indicates a likelihood of accuracy of a combination of the first integer ambiguity and the second integer ambiguity.

For example, the at least one first integer ambiguity includes N#11 and N#12, and the at least one second integer ambiguity includes N#21 and N#22. For example, N#11 and N#21 may correspond to one likelihood 90%, and the likelihood 90% indicates that a degree of accuracy of a combination of the first integer ambiguity valued N#11 and the second integer ambiguity valued N#21 is 90%. For another example, N#11 and N#22 may correspond to one likelihood 85%, and the likelihood 85% indicates that a degree of accuracy of a combination of the first integer ambiguity valued N#11 and the second integer ambiguity valued N#22 is 85%.

In this embodiment of this application, the first apparatus may consider a likelihood of accuracy corresponding to a plurality of integer ambiguities (the plurality of integer ambiguities include one first integer ambiguity and one second integer ambiguity) as a likelihood of accuracy of a single integer ambiguity in the plurality of integer ambiguities, or the first apparatus deduces the likelihood of accuracy of the single integer ambiguity in the plurality of integer ambiguities based on the likelihood of accuracy corresponding to the plurality of integer ambiguities. For example, the at least one first integer ambiguity includes N#11 and N#12, and the at least one second integer ambiguity includes N#21 and N#22. N#11 and N#21 may correspond to one likelihood 90%, and N#11 and N#22 may correspond to one likelihood 85%. The first apparatus may determine the likelihood of N#11 as 90% or 85%, or an average value of 90% and 85%, or a sum (or a difference) of 90% and a preset value (for example, 2%), or the like.

In a possible implementation, a relationship between the first distance value, the second distance value, the likelihood of accuracy of the second integer ambiguity, and the likelihood of accuracy of the first integer ambiguity may be represented by using Formula (1) below:

$$p(N^1, N^2) \propto 1/(|d_2 - d_1|)............\text{Formula (1)}$$

In Formula (1), $N^1$ represents the first integer ambiguity, $N^2$ is the first integer ambiguity, $p(N^1, N^2)$ represents the likelihood of accuracy of the first integer ambiguity and the second integer ambiguity, $d_1$ is the first distance value, $d_2$ is the second distance value, $|d_2 - d_1|$ represents an absolute value of the difference between the second distance value and the first distance value, and $\propto$ represents a correlation.

In this embodiment of this application, $N^1$ may be a value in the at least one (one or more) first integer ambiguity, and $N^2$ may represent a value in the at least one (one or more) second integer ambiguity. For example, the at least one first integer ambiguity includes N#11 and N#12, and the at least one second integer ambiguity includes N#21 and N#22. $N^1$ and $N^2$ may be respectively

valued N#11 and N#21 ($p(N^1, N^2)$ indicates a likelihood of value accuracy of a combination of N#11 and N#21), or may be respectively valued N#11 and N#22 ($p(N^1, N^2)$ indicates a likelihood of value accuracy of a combination of N#11 and N#22), or may be respectively valued N#12 and N#21 ($p(N^1, N^2)$ indicates a likelihood of value accuracy of a combination of N#12 and N#21), or may be respectively valued N#12 and N#22 ($p(N^1, N^2)$ indicates a likelihood of value accuracy of a combination of N#12 and N#22).

In this embodiment of this application, a likelihood may be determined with reference to more integer ambiguities. For example, with reference to three distance values corresponding to three integer ambiguities, when the three distance values are closer, a likelihood of accuracy of the three integer ambiguities corresponding to the three distance values is larger, or a correlation corresponding to the three integer ambiguities is stronger. In this case, one likelihood may indicate a likelihood corresponding to the three integer ambiguities.

In a possible implementation, the first distance value may be determined based on the first integer ambiguity. The first distance value is alternatively determined based on a first wavelength corresponding to the first frequency and the carrier phase measurement information in the first measurement information.

For example, the first distance value may be determined by using Formula (2) below:

$$d_1 = \lambda_1(N^1 + \phi_1/2\pi)......\text{Formula (2)}$$

In Formula (2), $d_1$ is the first distance value, $\lambda_1$ is a wavelength corresponding to the first frequency, $N^1$ is the first integer ambiguity, $\phi_1$ is the carrier phase measurement information in the first measurement information, $\pi$ is Pi, and / is division.

In this embodiment of this application, the first distance value may be alternatively determined in another manner. For example, the first apparatus may determine the first distance value based on other measurement information of a reference signal corresponding to the first frequency, for example, may determine the first distance value based on time measurement information such as a TOA and/or carrier phase measurement information such as a phase in the measurement information.

In a possible implementation, the second distance value may be determined based on the second integer ambiguity. The second distance value is alternatively determined based on a second wavelength corresponding to the second frequency and the carrier phase measurement information in the second measurement information.

For example, the second distance value may be determined by using Formula (3) below:

$$d_2 = \lambda_2(N^2 + \phi_2/2\pi)......\text{Formula (3)}$$

In Formula (3), $d_2$ is the second distance value, $\lambda_2$ is a wavelength corresponding to the second frequency, $N^2$ is the second integer ambiguity, $\phi_2$ is the carrier phase measurement information in the second measurement information, $\pi$ is Pi, and / is division.

In this embodiment of this application, the second distance value may be alternatively determined in another manner. For example, the first apparatus may determine the second distance value based on other measurement information of a reference signal corresponding to the second frequency, for example, may determine the second distance value based on time measurement information such as a TOA and/or carrier phase measurement information such as a phase in the measurement information.

In a possible implementation, the at least one first integer ambiguity is determined based on at least one of a third distance value, the first wavelength corresponding to the first frequency, or an error amount of the time measurement information in the first measurement information.

For example, the at least one first integer ambiguity is determined based on a first integer ambiguity set. For example, the first integer ambiguity belongs to or does not belong to the first integer ambiguity set. For related content, refer to the foregoing descriptions. Details are not described again. The first integer ambiguity set may be determined based on at least one of the third distance value, the first wavelength corresponding to the first frequency, or the error amount of the time measurement information in the first measurement information. In this embodiment of this application, the third distance value may be a distance at which the first reference signal or the second reference signal (the first reference signal and the second reference signal may be a same reference signal) is transmitted from a transmitting end to a receiving end.

For example, the first integer ambiguity set may be determined by using Formula (4) below:

$$N_{range}^1 = [d_{v1}/\lambda_1] \pm n_{range}^1......\text{Formula (4)}$$

In Formula (4), $N_{range}^1$ is the first integer ambiguity set, $d_{v1}$ is the third distance value, $\lambda_1$ is a wavelength corresponding to the first frequency, $n_{range}^1$ is an error range of the first integer ambiguity, and / is division.

In this embodiment of this application, $n_{range}^1$ may be an integer, for example, may be a value in {1, 2, 3, 4...}. $n_{range}^1$ may be obtained based on an error value of a parameter obtained by measuring the first reference signal, for example, based on time measurement information (for example, a TOA) and/or an error range of carrier phase measurement information in measurement information of the first reference signal. For example, TOA measurement quality corresponds to a TOA error value, the TOA error value may be converted into a distance error value, and a value obtained by dividing the distance error value by the wavelength corresponding to the first frequency of the first reference signal may be used as a value of $n^1_{range}$.

In this embodiment of this application, the first integer ambiguity may be alternatively determined in another manner.

In a possible implementation, the at least one second integer ambiguity is determined based on at least one of a third distance value, the second wavelength corresponding to the second frequency, or an error amount of the time measurement information in the second measurement information.

For example, the at least one second integer ambiguity may be determined based on a second integer ambiguity set. For example, the second integer ambiguity belongs to or does not belong to the second integer ambiguity set. For related content, refer to the foregoing descriptions. Details are not described again. The second integer ambiguity set may be determined based on at least one of the third distance value, the second wavelength corresponding to the second frequency, or the error amount of the time measurement information in the second measurement information.

For example, the second integer ambiguity set may be determined by using Formula (5) below:

$$N^2_{range} = [d_{v1}/\lambda_2] \pm n^2_{range} ......\text{Formula (5)}$$

In Formula (5), $N^2_{range}$ is the second integer ambiguity set, $d_{v1}$ is the third distance value, $\lambda_2$ is a wavelength corresponding to the second frequency, $n^2_{range}$ is an error range of the second integer ambiguity, and / is division.

In this embodiment of this application, $n^2_{range}$ may be an integer, for example, may be a value in {1, 2, 3, 4...}. $n^2_{range}$ may be obtained based on an error value of a parameter obtained by measuring the second reference signal, for example, based on time measurement information (for example, a TOA) and/or an error range of carrier phase measurement information in measurement information of the second reference signal. For example, TOA measurement quality corresponds to a TOA error value, the TOA error value may be converted into a distance error value, and a value obtained by dividing the distance error value by the wavelength corresponding to the second frequency of the second reference signal may be used as a value of $n^2_{range}$.

In a possible implementation, the first reference signal and the second reference signal may be a same reference signal, and the error value (for example, the TOA) of the parameter obtained by measuring the first reference signal and the error value (for example, the TOA) of the parameter obtained by measuring the second reference signal may be a same value.

In the foregoing implementations, in a possible implementation, the third distance value is determined based on at least one of a third wavelength corresponding to a third frequency, a fourth integer ambiguity corresponding to the third frequency, the carrier phase measurement information included in the first measurement information, or the carrier phase measurement information included in the second measurement information. The third frequency is determined based on the first frequency and the second frequency. For example, the third frequency is a frequency between the first frequency and the second frequency. For another example, the third frequency is a center frequency of a segment of bandwidth. The bandwidth may be understood as a bandwidth of a frequency domain resource occupied by the first reference signal and/or the second reference signal. The bandwidth includes the first frequency and the second frequency. The center frequency is between the first frequency and the second frequency. The first frequency and the second frequency may be considered as frequencies at two ends of the bandwidth. For example, $f_v = |f_1 - f_2|$, where $f_v$ is a value of the third frequency, $f_1$ is a value of the first frequency, and $f_2$ is a value of the second frequency.

For example, the third distance value may be determined by using Formula (6) below:

$$d_{v1} = N_{v_1}\lambda_{v_1} + \lambda_{v_1}\left(\frac{\phi_2 - \phi_1}{2\pi}\right)......\text{Formula (6)}$$

In Formula (6), $d_{v1}$ is the third distance value, $\lambda_{v_1}$ is the third wavelength corresponding to the third frequency, $N_{v_1}$ is the fourth integer ambiguity corresponding to the third frequency, $\phi_1$ is the carrier phase measurement information in the first measurement information, $\phi_2$ is the carrier phase measurement information in the second measurement information, and $\pi$ is Pi.

The fourth integer ambiguity corresponding to the third frequency may be determined based on the third wavelength and a fourth distance value. For example, $N_{v1} = [d_0/\lambda_{v1}]$, where $N_{v1}$ is the fourth integer ambiguity corresponding to the third frequency, $\lambda_{v_1}$ is the third wavelength corresponding to the third frequency, and $d_0$ is the fourth distance value. The fourth distance value may be determined based on the time measurement information included in the first measurement information and/or the time measurement information included in the second measurement information, for example, $d_0 = \tau_0 \times c$, where $d_0$ is the fourth distance value, $\tau_0$ is time measurement information (for example, a TOA) obtained by measuring the first reference signal (or the second reference signal), *c* is a speed of light, and × is multiplication. The third wavelength corresponding to the third frequency may be determined based on the first wavelength and the second wavelength, for example,

$\lambda_{V1} = \frac{1}{\frac{1}{\lambda_1} - \frac{1}{\lambda_2}} = \frac{\lambda_1 \lambda_2}{\lambda_2 - \lambda_1}$ , where $\lambda_{V1}$ is the third wave-

length corresponding to the third frequency, $\lambda_1$ is the first wavelength corresponding to the first frequency, and $\lambda_2$ is the second wavelength corresponding to the second frequency.

For example, the first reference signal (the first reference signal and the second reference signal are a same reference signal) occupies a bandwidth of 600 MHz, the value of the first frequency is 2.1 GHz, the value of the second frequency is 2.6 GHz, the value of the third frequency is 2.35 GHz, and the third wavelength is calculated to be 0.6 meters. In this solution, the third distance is determined with reference to the measurement information of the first frequency and the second frequency, so that accuracy of the third distance can be improved, thereby improving positioning accuracy.

In another possible implementation, the third distance value may be determined based on the time measurement information included in the first measurement information and/or the time measurement information included in the second measurement information.

For example, the third distance value may be determined by using Formula (7) below:

$$d_{v1} = \tau_0 \times c ......\text{Formula (7)}$$

In Formula (7), $d_{v1}$ is the third distance value, $\tau_0$ is time measurement information (for example, a TOA) obtained by measuring the first reference signal (or the second reference signal), *c* is a speed of light, and × is multiplication.

**Step 406:** The first apparatus sends the at least one second integer ambiguity and the second information.

Correspondingly, the second apparatus receives the at least one second integer ambiguity and the second information.

The first integer ambiguity, the first information, the second integer ambiguity, and the second information may be sent by using one or more messages. The second integer ambiguity and the second information may be carried in an LPP provide location information (LPP provide location information) message, or may be carried in an LPP provide location information NRPPa measurement response (NRPPa measurement response) message.

**Step 407:** The second apparatus performs positioning based on the at least one first integer ambiguity, the first information, the at least one second integer ambiguity, and the second information.

There are a plurality of manners in which the second apparatus performs positioning with assistance of the first information and the second information. For example, a more accurate integer ambiguity may be selected with assistance of the first information and the second information, thereby improving positioning accuracy. Alternatively, the second apparatus provides, with assistance of the first information and the second information, information indicating a degree of accuracy of location information (for example, location information of a terminal that needs to be positioned). For example, when the second apparatus determines that reliability of the first integer ambiguity and the second integer ambiguity indicated by the first information and the second information is relatively high, reliability of location information obtained by the second apparatus based on the first integer ambiguity and the second integer ambiguity is also relatively high, and the second apparatus may provide one piece of information, where the information indicates that reliability of the location information is relatively high.

In a possible implementation, the second apparatus determines the third integer ambiguity based on the at least one first integer ambiguity, the first information, the at least one second integer ambiguity, and the second information.

In the embodiment shown in FIG. 4, there is no necessary sequence between any one of step 404, step 405, and step 406 and any one of step 401, step 402, and step 403. For example, any one of step 404, step 405, and step 406 may be performed before step 403, or before step 402, or before step 401.

Step 401 and step 404 may be one step or two steps. Step 402 and step 405 may be one step or two steps. Step 403 and step 406 may be one step or two steps. For example, the at least one first integer ambiguity, the first information, the at least one second integer ambiguity, and the second information may be carried in one message, or may be carried in a plurality of messages.

In this solution, the first apparatus may determine the third integer ambiguity with reference to more information, so that accuracy of the third integer ambiguity can be improved, thereby further improving positioning accuracy.

In this embodiment of this application, there are a plurality of solutions for determining the third integer ambiguity. For example, the third integer ambiguity may be a highest (or relatively high) likelihood of accuracy in integer ambiguities (including the at least one first integer ambiguity and the at least one second integer ambiguity) obtained by the first apparatus. Alternatively, the third integer ambiguity may be an average value (or a weighted average value) or the like of a plurality of integer ambiguities with relatively high likelihoods of accuracy in integer ambiguities (including the at least one first integer ambiguity and the at least one second integer ambiguity) obtained by the first apparatus.

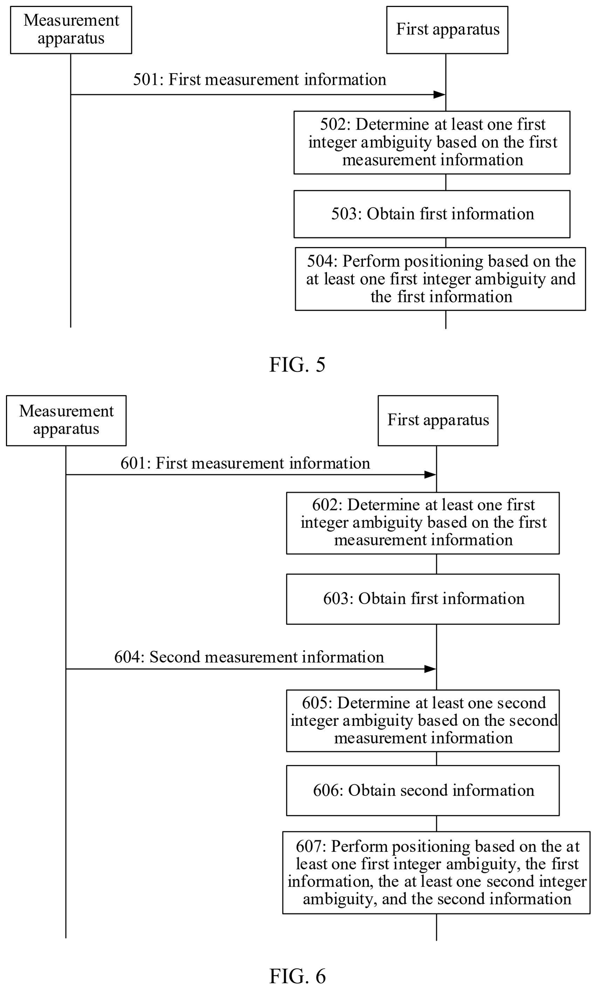

Based on the embodiments shown in FIG. 2A, FIG. 2B, FIG. 2C, FIG. 2D, FIG. 2E, FIG. 2F, FIG. 3, and FIG. 4 and the foregoing other content, **FIG. 5 and FIG. 6** are examples of schematic flowcharts of several positioning methods according to embodiments of this application.

In implementations shown in FIG. 5 and FIG. 6, a first apparatus may be the location management device in FIG. 2A, FIG. 2B, FIG. 2C, FIG. 2D, FIG. 2E, FIG. 2F, FIG. 3, or FIG. 4 or a chip system inside the location management device. In this embodiment of this application, the first apparatus may receive measurement information (for example, first measurement information and/or second measurement information), and then determine a third integer ambiguity, so as to perform positioning based on the third integer ambiguity.

Refer to **FIG. 5.** The method includes the following steps.

**Step 501:** A measurement apparatus sends the first measurement information.

Correspondingly, the first apparatus receives the first measurement information from the measurement apparatus.

The measurement apparatus in step 501 may be a device configured to measure a first reference signal to obtain the first measurement information. The measurement apparatus may be the terminal, a chip system inside the terminal, the network device, or a chip system inside the network device in FIG. 2A, FIG. 2B, FIG. 2C, FIG. 2D, FIG. 2E, or FIG. 2F.

**Step 502:** The first apparatus determines at least one first integer ambiguity based on the first measurement information.

For content of step 502, refer to the content of step 301. Details are not described again.

**Step 503:** The first apparatus obtains first information.

For content of step 503, refer to the content of step 302. Details are not described again.

**Step 504:** The first apparatus performs positioning based on the at least one first integer ambiguity and the first information.

For content of step 504, refer to the content of step 304. Details are not described again.

Refer to **FIG. 6.** The method includes the following steps.

**Step 601:** A measurement apparatus sends the first measurement information.

Correspondingly, the first apparatus receives the first measurement information from the measurement apparatus.

For content of step 601, refer to the content of step 501. Details are not described again.

**Step 602:** The first apparatus determines at least one first integer ambiguity based on the first measurement information.

For content of step 602, refer to the content of step 401. Details are not described again.

**Step 603:** The first apparatus obtains first information.

For content of step 603, refer to the content of step 402. Details are not described again.

**Step 604:** The measurement apparatus sends the second measurement information.

Correspondingly, the first apparatus receives the second measurement information from the measurement apparatus.

The measurement apparatus in step 604 may be a device configured to measure a second reference signal to obtain the second measurement information. The measurement apparatus may be the terminal, a chip system inside the terminal, the network device, or a chip system inside the network device in FIG. 2A, FIG. 2B, FIG. 2C, FIG. 2D, FIG. 2E, or FIG. 2F.

The measurement apparatus in step 604 and the measurement apparatus in step 601 may be a same device (a same device is used as an example in FIG. 6), or may be two different devices. Step 601 and step 604 may be one step or two steps. The first measurement information and the second measurement information may be sent by using one or more messages.

**Step 605:** The first apparatus determines at least one second integer ambiguity based on the second measurement information.

For content of step 605, refer to the content of step 404. Details are not described again.

**Step 606:** The first apparatus obtains second information.

For content of step 606, refer to the content of step 405. Details are not described again.

**Step 607:** The first apparatus performs positioning based on the at least one first integer ambiguity, the first information, the at least one second integer ambiguity, and the second information.

For content of step 607, refer to the content of step 407. Details are not described again.

It can be learned from the solutions provided in FIG. 3, FIG. 4, FIG. 5, and FIG. 6 that, in the solutions provided in embodiments of this application, another apparatus may report a determined integer ambiguity and a likelihood of accuracy of the integer ambiguity to a location management device, so that the location management device determines a more accurate integer ambiguity (the embodiments shown in FIG. 3 and FIG. 4). In another possible implementation, the location management device may obtain measurement information, then determine an integer ambiguity and a likelihood of accuracy of the integer ambiguity, and then determine a more accurate integer ambiguity based on the information (the embodiments shown in FIG. 5 and FIG. 6). Embodiments of this application provide various solutions, improving solution flexibility.

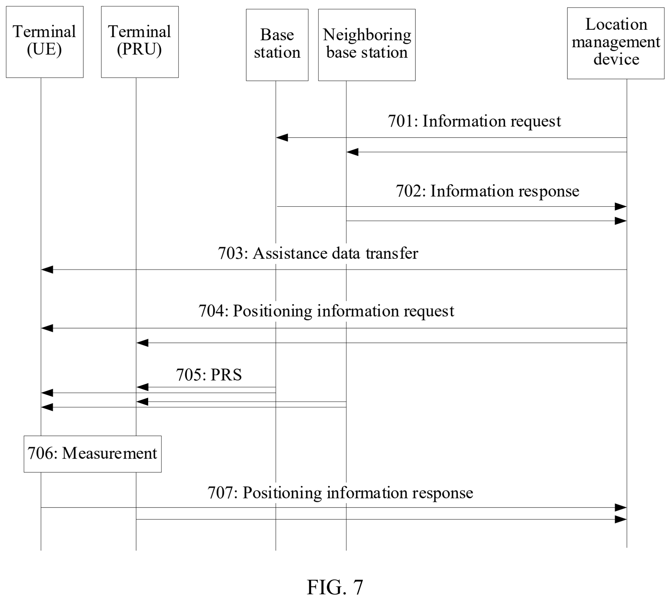

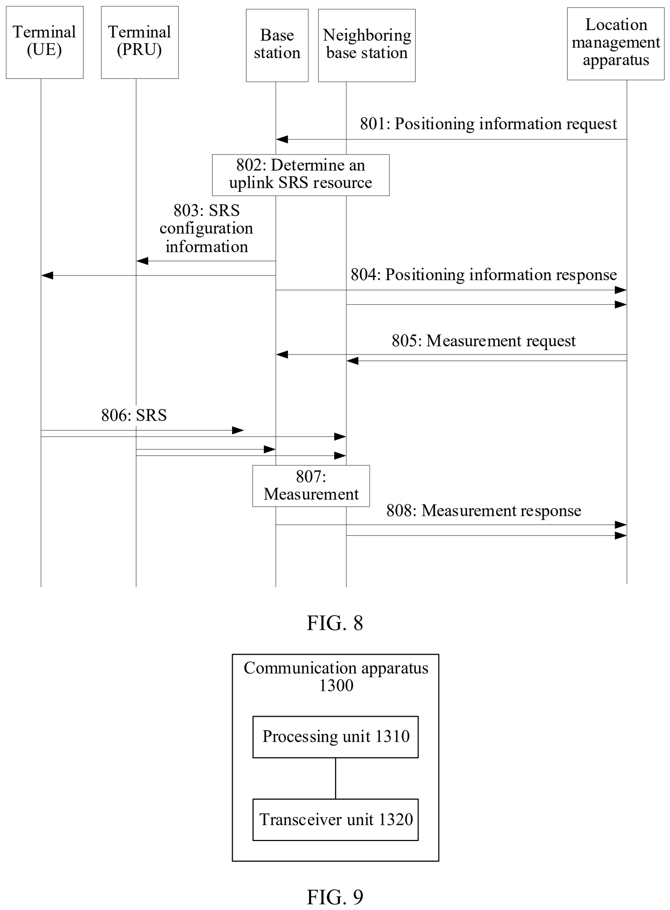

Based on the embodiments shown in FIG. 2A, FIG. 2B, FIG. 2C, FIG. 2D, FIG. 2E, FIG. 2F, FIG. 3, FIG. 4, FIG. 5, and FIG. 6 and the foregoing other content, **FIG. 7 and FIG. 8** are examples of schematic flowcharts of several positioning methods according to embodiments of this application.

FIG. 7 and FIG. 8 may be considered as an extended embodiment of FIG. 3, FIG. 4, FIG. 5, or FIG. 6. FIG. 7 may be considered as an example of downlink positioning. In this example, a network device (the network device may include an access network device, and the access network device includes, for example, a base station and/or a neighboring base station) sends a reference signal, and a terminal measures the reference signal. FIG. 8 may be considered as an example of uplink positioning. In this example, a terminal sends a reference signal, and a network device measures the reference signal.

A PRU in this embodiment of this application may also be considered as a type of terminal. A type of the terminal in this embodiment of this application is not limited to UE and a PRU. The terminal in FIG. 7 and FIG. 8 may alternatively be another type. Types of any two terminals shown in FIG. 7 and FIG. 8 may be the same or different.

Refer to FIG. 7. The method includes the following steps.

**Step 701:** A location management device sends an information request to a base station (and/or a neighboring base station).

The information request may include, for example, a gNB/TRP information request.

Before step 701, an LMF may obtain a capability of a terminal (UE and/or a PRU) by performing an LPP capability transfer (capability transfer) process.

**Step 702:** The base station (and/or the neighboring base station) sends an information response to the location management device.

The information response may include cell information, coordinates, an identifier, a PRS configuration, or the like of the base station (and/or the neighboring base station).

**Step 703:** The location management device sends assistance data transfer to the terminal (UE).

The assistance data transfer may be used to transmit assistance information, such as the PRS configuration or the coordinates of the base station (and/or the neighboring base station). The assistance data transfer may include, for example, assistance data transfer.

**Step 704:** The location management device sends a positioning information request to the terminal (the UE and/or the PRU).

The positioning information request is used to request the terminal (the UE and/or the PRU) to measure a received reference signal (for example, a PRS).

**Step 705:** The base station (and/or the neighboring base station) sends a reference signal (for example, a PRS).

The reference signal in step 705 may alternatively be another reference signal. In FIG. 7, an example in which the reference signal is a PRS is used for presentation. The reference signal in step 705 may be understood as the first reference signal and the second reference signal in FIG. 3, FIG. 4, FIG. 5, or FIG. 6.

**Step 706:** The terminal (the UE and/or the PRU) measures the received reference signal.

In step 706, the terminal measures the reference signal to obtain measurement information. The measurement information may be understood as the first measurement information and/or the second measurement information in FIG. 3, FIG. 4, FIG. 5, or FIG. 6.

**Step 707:** The terminal (the UE and/or the PRU) sends a positioning information response to the location management device.

When FIG. 7 is considered as an extended embodiment of the embodiments shown in FIG. 3 and FIG. 4, the first apparatus may be considered as the terminal in FIG. 7 or a chip system inside the terminal, the second apparatus may be considered as the location management device in FIG. 7 or a chip system inside the location management device, and the positioning information response in step 707 may include at least one of the at least one first integer ambiguity, the first information, the at least one second integer ambiguity, or the second information.

When FIG. 7 is considered as an extended embodiment of the embodiments shown in FIG. 5 and FIG. 6, the first apparatus may be considered as the location management device in FIG. 7 or a chip system inside the location management device, and the positioning information response in step 707 may include the first measurement information and/or the second measurement information.

Refer to FIG. 8. The method includes the following steps.

**Step 801:** A location management device sends a positioning information request to a base station.

The positioning information request may include, for example, an NRPPa positioning information request.

**Step 802:** The base station determines an uplink reference signal (for example, an SRS) resource.

**Step 803:** The base station sends reference signal (for example, SRS) configuration information to a terminal (UE and/or a PRU). In FIG. 8, an example in which the base station sends the SRS configuration information to the terminal is used for illustration.

**Step 804:** The base station (and/or a neighboring base station) sends a positioning information response to the location management device.

The positioning information response may include, for example, an NRPPa positioning information response.

The positioning information response may include cell information, coordinates, an ID, or the like of the base station (and/or the neighboring base station).

**Step 805:** The location management device sends a measurement request to the base station (and/or the neighboring base station).

The measurement request is used to request the base station (and/or the neighboring base station) to measure a received reference signal (for example, an SRS).

**Step 806:** The terminal (the UE and/or the PRU) sends a reference signal (for example, an SRS).

The reference signal in step 806 may alternatively be another reference signal. In FIG. 8, an example in which the reference signal is an SRS is used for presentation. The reference signal in step 806 may be understood as the first reference signal and the second reference signal in FIG. 3, FIG. 4, FIG. 5, or FIG. 6.

**Step 807:** The base station (and/or the neighboring base station) measures the received reference signal.

In step 807, the terminal measures the reference signal to obtain measurement information. The measurement information may be understood as the first measurement information and/or the second measurement information in FIG. 3, FIG. 4, FIG. 5, or FIG. 6.

**Step 808:** The base station (and/or the neighboring base station) sends a measurement response to the location management device.

When FIG. 8 is considered as an extended embodiment of the embodiments shown in FIG. 3 and FIG. 4, the first apparatus may be considered as the terminal in FIG. 8 or a chip system inside the terminal, the second apparatus may be considered as the location management device in FIG. 8 or a chip system inside the location management device, and the measurement response in step 808 may include at least one of the at least one first integer ambiguity, the first information, the at least one second integer ambiguity, or the second information.

When FIG. 8 is considered as an extended embodiment of the embodiments shown in FIG. 5 and FIG. 6, the first apparatus may be considered as the location management device in FIG. 8 or a chip system inside the location management device, and the measurement response in step 808 may include the first measurement information and/or the second measurement information.

It may be understood that, to implement the functions in the foregoing embodiments, the network device (for example, the base station and/or the neighboring base station) and the terminal include corresponding hardware structures and/or software modules for performing the functions. A person skilled in the art should be easily aware that, in combination with units and method steps of the examples described in embodiments disclosed in this application, this application may be implemented by using hardware or a combination of hardware and computer software. Whether a function is performed by hardware or hardware driven by computer software depends on particular application scenarios and design constraints of the technical solutions.

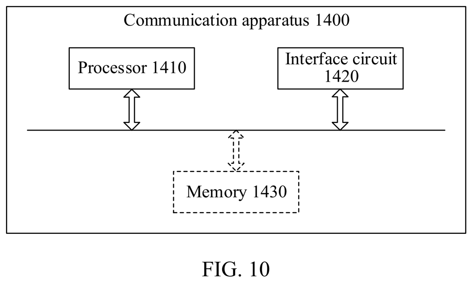

FIG. 9 and FIG. 10 are diagrams of possible structures of communication apparatuses according to embodiments of this application. These communication apparatuses may be configured to implement the functions of the terminal or the base station in the foregoing method embodiments. Therefore, beneficial effects of the foregoing method embodiments can also be implemented. In this embodiment of this application, the communication apparatus may be the terminal (for example, the terminal 120 shown in FIG. 2A), the RAN node (for example, the RAN node 110 shown in FIG. 2A), or the location management device shown in FIG. 2A, FIG. 2B, FIG. 2C, FIG. 2D, FIG. 2E, or FIG. 2F, or may be a module (for example, a chip) used in the terminal, the RAN node, or the location management device shown in FIG. 2A, FIG. 2B, FIG. 2C, FIG. 2D, FIG. 2E, or FIG. 2F.

As shown in FIG. 9, a communication apparatus 1300 includes a processing unit 1310 and a transceiver unit 1320. The communication apparatus 1300 is configured to implement the functions of the first apparatus or the second apparatus in the method embodiments shown in FIG. 3, FIG. 4, FIG. 5, FIG. 6, FIG. 7, and FIG. 8. The transceiver unit 1320 may include a receiving unit and a sending unit. The receiving unit may be configured to implement receiving-related functions performed by the first apparatus or the second apparatus in the method embodiments shown in FIG. 3, FIG. 4, FIG. 5, FIG. 6, FIG. 7, and FIG. 8, and the sending unit may be configured to implement sending-related functions performed by the first apparatus or the second apparatus in the method embodiments shown in FIG. 3, FIG. 4, FIG. 5, FIG. 6, FIG. 7, and FIG. 8. The processing unit 1310 is configured to implement functions, other than sending and receiving, performed by the first apparatus or the second apparatus in the method embodiments shown in FIG. 3, FIG. 4, FIG. 5, FIG. 6, FIG. 7, and FIG. 8.

When the communication apparatus 1300 is configured to implement the functions of the first apparatus in the method embodiments shown in FIG. 3, FIG. 4, FIG. 5, FIG. 6, FIG. 7, and FIG. 8, the processing unit 1310 is configured to determine a first integer ambiguity based on first measurement information and obtain first information.

When the communication apparatus 1300 is configured to implement the functions of the first apparatus in the method embodiments shown in FIG. 3, FIG. 4, FIG. 5, FIG. 6, FIG. 7, and FIG. 8, the processing unit 1310 is further configured to send the first integer ambiguity and the first information by using the transceiver unit 1320.

When the communication apparatus 1300 is configured to implement the functions of the first apparatus in the method embodiments shown in FIG. 3, FIG. 4, FIG. 5, FIG. 6, FIG. 7, and FIG. 8, the processing unit 1310 is further configured to determine a second integer ambiguity based on second measurement information and obtain second information by using the transceiver unit 1320.

When the communication apparatus 1300 is configured to implement the functions of the first apparatus in the method embodiments shown in FIG. 3, FIG. 4, FIG. 5, FIG. 6, FIG. 7, and FIG. 8, the processing unit 1310 is further configured to send the second integer ambiguity and the second information by using the transceiver unit 1320.

When the communication apparatus 1300 is configured to implement the functions of the first apparatus in the method embodiments shown in FIG. 3, FIG. 4, FIG. 5, FIG. 6, FIG. 7, and FIG. 8, the processing unit 1310 is further configured to determine a first integer ambiguity set based on the first measurement information.

When the communication apparatus 1300 is configured to implement the functions of the first apparatus in the method embodiments shown in FIG. 3, FIG. 4, FIG. 5, FIG. 6, FIG. 7, and FIG. 8, the processing unit 1310 is configured to determine a first integer ambiguity based on first measurement information and obtain first information.

When the communication apparatus 1300 is configured to implement the functions of the first apparatus in the method embodiments shown in FIG. 3, FIG. 4, FIG. 5, FIG. 6, FIG. 7, and FIG. 8, the processing unit 1310 is further configured to: receive the first measurement information by using the transceiver unit 1320; and perform positioning based on the first integer ambiguity and the first information.

When the communication apparatus 1300 is configured to implement the functions of the first apparatus in the method embodiments shown in FIG. 3, FIG. 4, FIG. 5, FIG. 6, FIG. 7, and FIG. 8, the processing unit 1310 is further configured to determine a second integer ambiguity based on second measurement information and obtain second information by using the transceiver unit 1320.

When the communication apparatus 1300 is configured to implement the functions of the first apparatus in the method embodiments shown in FIG. 3, FIG. 4, FIG. 5, FIG. 6, FIG. 7, and FIG. 8, the processing unit 1310 is further configured to: receive the second measurement information by using the transceiver unit 1320; and perform positioning based on the first integer ambiguity, the first information, the second integer ambiguity, and the second information.

When the communication apparatus 1300 is configured to implement the functions of the first apparatus in the method embodiments shown in FIG. 3, FIG. 4, FIG. 5, FIG. 6, FIG. 7, and FIG. 8, the processing unit 1310 is further configured to determine a first integer ambiguity set based on the first measurement information.

When the communication apparatus 1300 is configured to implement the functions of the second apparatus in the method embodiments shown in FIG. 3, FIG. 4, FIG. 5, FIG. 6, FIG. 7, and FIG. 8, the processing unit 1310 is configured to: receive a first integer ambiguity and first information by using the transceiver unit 1320; and perform positioning based on the first integer ambiguity and the first information.

When the communication apparatus 1300 is configured to implement the functions of the second apparatus in the method embodiments shown in FIG. 3, FIG. 4, FIG. 5, FIG. 6, FIG. 7, and FIG. 8, the processing unit 1310 is further configured to: receive a second integer ambiguity and second information by using the transceiver unit 1320; and perform positioning based on the first integer ambiguity, the first information, the second integer ambiguity, and the second information.

As shown in FIG. 10, a communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to store instructions executed by the processor 1410, or store input data required by the processor 1410 to run the instructions, or store data generated after the processor 1410 runs the instructions.

When the communication apparatus 1400 is configured to implement the methods shown in FIG. 3, FIG. 4, FIG. 5, FIG. 6, FIG. 7, and FIG. 8, the processor 1410 is configured to implement a function of the processing unit 1310, and the interface circuit 1420 is configured to implement a function of the transceiver unit 1320.

When the communication apparatus is a chip used in a terminal, the chip in the terminal implements the functions of the terminal apparatus in the foregoing method embodiments. That the chip in the terminal receives information from a base station may be understood as that the information is first received by other modules (for example, a radio frequency module or an antenna) in the terminal, and then sent by these modules to the chip in the terminal. That the chip in the terminal sends information to a base station may be understood as that the information is first sent to other modules (for example, a radio frequency module or an antenna) in the terminal, and then sent by these modules to the base station.

When the communication apparatus is a chip used in a base station, the chip in the base station implements the functions of the network apparatus in the foregoing method embodiments. That the chip in the base station receives information from a terminal may be understood as that the information is first received by other modules (for example, a radio frequency module or an antenna) in the base station, and then sent by these modules to the chip in the base station. That the chip in the base station sends information to a terminal may be understood as that the information is first delivered to other modules (for example, a radio frequency module or an antenna) in the base station, and then sent by these modules to the terminal.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives, via another entity, the information sent by the entity A. The entities A and B herein may be RAN nodes or terminals, or may be modules inside the RAN nodes or the terminals. Information sending and receiving may be information exchange between a RAN node and a terminal, for example, information exchange between a base station and a terminal; or information sending and receiving may be information exchange between two RAN nodes, for example, information exchange between a CU and a DU; or information sending and receiving may be information exchange between different modules inside an apparatus, for example, information exchange between a chip in a terminal and another module in the terminal, or information exchange between a chip in a base station and another module in the base station.

It may be understood that the processor in embodiments of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Alternatively, the processor and the storage medium may exist in a base station or a terminal as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. Moreover, "and/or" describes an association relationship between associated objects, and represents that three relationships may exist. For example, A and/or B may represent the following cases: Only A exists, both A and B exist, and only B exists, where A and B may be singular or plural. In the text descriptions of this application, a character "/" indicates an "or" relationship between the associated objects. In a formula in this application, the character "/" indicates a "division" relationship between the associated objects. In addition, "including at least one of A, B, and C" may represent: including A; including B; including C; including A and B; including A and C; including B and C; and including A, B, and C.

It may be understood that various numbers (for example, digital numbers "first" and "second", and letter numbers "parameter A", "parameter B", and "parameter C") in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A positioning method, wherein the method comprises:

   determining, by a first apparatus, a first integer ambiguity based on first measurement information, wherein the first measurement information comprises time measurement information and/or carrier phase measurement information, and the first measurement information is obtained by measuring at least one first reference signal;
   sending, by the first apparatus, the first integer ambiguity and first information, wherein the first information indicates reliability of the first integer ambiguity;
   receiving, by a second apparatus, the first integer ambiguity and the first information; and
   performing, by the second apparatus, positioning based on the first integer ambiguity and the first information.

2. The method according to claim 1, wherein the method further comprises:

   determining, by the first apparatus, a second integer ambiguity based on second measurement information, wherein the second measurement information comprises time measurement information and/or carrier phase measurement information, and the second measurement information is obtained by measuring at least one second reference signal;
   sending, by the first apparatus, the second integer ambiguity and second information, wherein the second information indicates reliability of the second integer ambiguity; and
   receiving, by the second apparatus, the second integer ambiguity and the second information; and
   performing, by the second apparatus, positioning based on the first integer ambiguity and the first information comprises:
   performing, by the second apparatus, positioning based on the first integer ambiguity, the first information, the second integer ambiguity, and the second information.

3. A positioning method, wherein the method comprises:

   receiving, by a first apparatus, first measurement information, wherein the first measurement information comprises time measurement information and/or carrier phase measurement information, and the first measurement information is obtained by measuring at least one first reference signal;
   determining, by the first apparatus, a first integer ambiguity based on the first measurement information; and
   performing, by the first apparatus, positioning based on the first integer ambiguity and first information, wherein the first information indicates reliability of the first integer ambiguity.

4. The method according to claim 3, wherein the method further comprises:

   receiving, by the first apparatus, second measurement information, wherein the second measurement information comprises time measurement information and/or carrier phase measurement information, and the second measurement information is obtained by measuring at least one second reference signal; and
   determining, by the first apparatus, a second integer ambiguity based on the second measurement information; and
   performing, by the first apparatus, positioning based on the first integer ambiguity and the first information comprises:
   performing, by the first apparatus, positioning based on the first integer ambiguity, the first information, the second integer ambiguity, and the second information, wherein the second information indicates reliability of the second integer ambiguity.

5. The method according to any one of claims 1 to 4, wherein the method further comprises:
   determining, by the first apparatus, the first information based on the first measurement information and the first integer ambiguity.

6. The method according to any one of claims 1 to 5, wherein determining, by the first apparatus, the first integer ambiguity based on the first measurement information comprises:

   determining, by the first apparatus, a first integer ambiguity set based on the first measurement information, wherein the first integer ambiguity set comprises at least one integer ambiguity, wherein
   the first integer ambiguity is an integer ambiguity in the first integer ambiguity set; or the first integer ambiguity is determined based on an integer ambiguity in the first integer ambiguity set.

7. The method according to any one of claims 2, 4, 5, and 6, wherein the method further comprises:
   determining, by the first apparatus, the second information based on the second measurement information and the second integer ambiguity.

8.  The method according to any one of claims 2, 4, and 7, wherein the first measurement information is obtained based on measurement information of a first frequency of the at least one first reference signal;

    the second measurement information is obtained based on measurement information of a second frequency of the at least one second reference signal; and
    the first frequency is different from the second frequency.

9.  The method according to any one of claims 2, 4, 7, and 8, wherein one first reference signal in the at least one first reference signal and one second reference signal in the at least one second reference signal are a same reference signal.

10. The method according to any one of claims 2, 4, and 7 to 9, wherein the first information and the second information are same information, and the first information indicates reliability of the first integer ambiguity and the second integer ambiguity.

11. The method according to any one of claims 1 to 10, wherein the at least one first reference signal comprises a third reference signal and a fourth reference signal; and
    the carrier phase measurement information in the first measurement information comprises at least one of the following content:

    information indicating a first phase, wherein the first phase is obtained by a third apparatus by measuring the third reference signal from a fourth apparatus;
    information indicating a first phase difference, wherein the first phase difference is obtained based on the first phase and a second phase, and the second phase is obtained by the third apparatus by measuring the fourth reference signal from the fifth apparatus;
    information indicating a second phase difference, wherein the second phase difference is obtained based on the first phase and a third phase, and the third phase is obtained by the sixth apparatus by measuring the third reference signal from the fourth apparatus;
    information indicating a third phase difference, wherein the third phase difference is obtained based on the first phase difference and a fourth phase difference, the fourth phase difference is obtained based on the fourth phase and a fifth phase, the fourth phase is obtained by the sixth apparatus by measuring the third reference signal from the fourth apparatus, and the fifth phase is obtained by the sixth apparatus by measuring the fourth reference signal from the fifth apparatus; or
information indicating the fourth phase difference, wherein the fourth phase difference is determined based on an obtained phase arrival error PAE, and the fourth phase difference is further determined based on the first phase and/or the first phase difference.

12. A positioning apparatus, wherein the apparatus comprises a processing unit and a transceiver unit, wherein

    the processing unit is configured to determine a first integer ambiguity based on first measurement information, wherein the first measurement information comprises time measurement information and/or carrier phase measurement information, and the first measurement information is obtained by measuring at least one first reference signal; and
    the transceiver unit is configured to send the first integer ambiguity and first information, wherein the first information indicates reliability of the first integer ambiguity, and the first integer ambiguity and the first information are used for positioning.

13. The apparatus according to claim 12, wherein the processing unit is further configured to determine a second integer ambiguity based on second measurement information, wherein the second measurement information comprises time measurement information and/or carrier phase measurement information, and the second measurement information is obtained by measuring at least one second reference signal; and
    the transceiver unit is further configured to send the second integer ambiguity and second information, wherein the second information indicates reliability of the second integer ambiguity, and the second integer ambiguity and the second information are used to perform positioning with reference to the first integer ambiguity and the first information.

14. A positioning apparatus, wherein the apparatus comprises a processing unit and a transceiver unit, wherein

    the transceiver unit is configured to receive first measurement information, wherein the first measurement information comprises time measurement information and/or carrier phase measurement information, and the first measurement information is obtained by measuring at least one first reference signal; and
    the processing unit is configured to: determine a first integer ambiguity based on the first measurement information, and perform positioning based on the first integer ambiguity and first information, wherein the first information indicates reliability of the first integer ambiguity.

15. The apparatus according to claim 14, wherein the transceiver unit is further configured to receive second measurement information, wherein the second measurement information comprises time measurement information and/or carrier phase measurement information, and the second measurement information is obtained by measuring at least one second reference signal;

the processing unit is further configured to determine a second integer ambiguity based on the second measurement information; and
the processing unit is specifically configured to perform positioning based on the first integer ambiguity, the first information, the second integer ambiguity, and the second information, wherein the second information indicates reliability of the second integer ambiguity.

16. The apparatus according to any one of claims 12 to 15, wherein the processing unit is further configured to:
determine the first information based on the first measurement information and the first integer ambiguity.

17. The apparatus according to any one of claims 12 to 16, wherein the processing unit is specifically configured to:

determine a first integer ambiguity set based on the first measurement information, wherein the first integer ambiguity set comprises at least one integer ambiguity, wherein
the first integer ambiguity is an integer ambiguity in the first integer ambiguity set; or the first integer ambiguity is determined based on an integer ambiguity in the first integer ambiguity set.

18. The apparatus according to any one of claims 13, 15, 16, and 17, wherein the processing unit is further configured to:
determine the second information based on the second measurement information and the second integer ambiguity.

19. A positioning apparatus, wherein the apparatus comprises a processing unit and a transceiver unit, wherein

the transceiver unit is configured to receive a first integer ambiguity and first information, wherein the first integer ambiguity is determined based on first measurement information, the first measurement information comprises time measurement information and/or carrier phase measurement information, the first measurement information is obtained by measuring at least one first reference signal, and the first information indicates reliability of the first integer ambiguity; and
the processing unit is configured to perform positioning based on the first integer ambiguity and the first information.

20. The apparatus according to claim 19, wherein the processing unit is further configured to use the transceiver unit to:

the transceiver unit is further configured to receive a second integer ambiguity and second information, wherein the second integer ambiguity is determined based on second measurement information, the second measurement information comprises time measurement information and/or carrier phase measurement information, the second measurement information is obtained by measuring at least one second reference signal, and the second information indicates reliability of the second integer ambiguity; and
the processing unit is further configured to perform positioning based on the first integer ambiguity, the first information, the second integer ambiguity, and the second information.

21. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 11 by using a logic circuit or by executing code instructions.

22. A communication system, comprising a first apparatus and a second apparatus, wherein the first apparatus is configured to: determine a first integer ambiguity based on first measurement information, and send the first integer ambiguity and first information, wherein the first measurement information comprises time measurement information and/or carrier phase measurement information, the first measurement information is obtained by measuring at least one first reference signal, and the first information indicates reliability of the first integer ambiguity; and the second apparatus is configured to: receive the first integer ambiguity and the first information, and perform positioning based on the first integer ambiguity and the first information.

23. A communication system, comprising a first apparatus and a measurement information sending apparatus, wherein

the measurement information sending apparatus is configured to send first measurement information, wherein the first measurement information comprises time measurement information and/or carrier phase measurement information, and the first measurement information is obtained by measuring at least one first reference signal; and

the first apparatus is configured to: determine a first integer ambiguity based on the first measurement information, and perform positioning based on the first integer ambiguity and first information, wherein the first information indicates reliability of the first integer ambiguity.

24. A computer-readable storage medium, wherein the storage medium stores a computer program or instructions, and when the computer program or the instructions are executed by a communication apparatus, the method according to any one of claims 1 to 11 is implemented.

FIG. 1

FIG. 2A

FIG. 2B

FIG. 2C

FIG. 2D

FIG. 2E

FIG. 2F

| Second apparatus | | First apparatus |
|---|---|---|

301: Determine at least one first integer ambiguity based on first measurement information

302: Obtain first information

303: At least one first integer ambiguity and first information

304: Perform positioning based on the at least one first integer ambiguity and the first information

FIG. 3

| Second apparatus | | First apparatus |
|---|---|---|

401: Determine at least one first integer ambiguity based on first measurement information

402: Obtain first information

403: At least one first integer ambiguity and first information

404: Determine at least one second integer ambiguity based on second measurement information

405: Obtain second information

406: At least one second integer ambiguity and second information

407: Perform positioning based on the at least one first integer ambiguity, the first information, the at least one second integer ambiguity, and the second information

FIG. 4

```
┌──────────────┐                                      ┌──────────────┐
│ Measurement  │                                      │First apparatus│
│  apparatus   │                                      │              │
└──────┬───────┘                                      └──────┬───────┘
       │      501: First measurement information              │
       ├────────────────────────────────────────────────────▶│
       │                             ┌───────────────────────────────────┐
       │                             │ 502: Determine at least one first │
       │                             │ integer ambiguity based on the first│
       │                             │    measurement information        │
       │                             └───────────────────────────────────┘
       │                             ┌───────────────────────────────────┐
       │                             │   503: Obtain first information    │
       │                             └───────────────────────────────────┘
       │                             ┌───────────────────────────────────┐
       │                             │ 504: Perform positioning based on the│
       │                             │ at least one first integer ambiguity and│
       │                             │       the first information        │
       │                             └───────────────────────────────────┘
       │                                                     │
```

FIG. 5

```
┌──────────────┐                                      ┌──────────────┐
│ Measurement  │                                      │First apparatus│
│  apparatus   │                                      │              │
└──────┬───────┘                                      └──────┬───────┘
       │      601: First measurement information              │
       ├────────────────────────────────────────────────────▶│
       │                             ┌───────────────────────────────────┐
       │                             │ 602: Determine at least one first │
       │                             │ integer ambiguity based on the first│
       │                             │    measurement information        │
       │                             └───────────────────────────────────┘
       │                             ┌───────────────────────────────────┐
       │                             │   603: Obtain first information    │
       │                             └───────────────────────────────────┘
       │    604: Second measurement information               │
       ├────────────────────────────────────────────────────▶│
       │                             ┌───────────────────────────────────┐
       │                             │ 605: Determine at least one second│
       │                             │ integer ambiguity based on the second│
       │                             │    measurement information        │
       │                             └───────────────────────────────────┘
       │                             ┌───────────────────────────────────┐
       │                             │  606: Obtain second information    │
       │                             └───────────────────────────────────┘
       │                             ┌───────────────────────────────────┐
       │                             │ 607: Perform positioning based on the at│
       │                             │ least one first integer ambiguity, the first│
       │                             │ information, the at least one second integer│
       │                             │ ambiguity, and the second information │
       │                             └───────────────────────────────────┘
       │                                                     │
```

FIG. 6

FIG. 7

Terminal (UE) | Terminal (PRU) | Base station | Neighboring base station | Location management apparatus

801: Positioning information request

802: Determine an uplink SRS resource

803: SRS configuration information

804: Positioning information response

805: Measurement request

806: SRS

807: Measurement

808: Measurement response

FIG. 8

Communication apparatus 1300

Processing unit 1310

Transceiver unit 1320

FIG. 9

Communication apparatus 1400

Processor 1410

Interface circuit 1420

Memory 1430

FIG. 10

## INTERNATIONAL SEARCH REPORT

International application No.

**PCT/CN2024/099669**

| A. | CLASSIFICATION OF SUBJECT MATTER |
| --- | --- |

H04W4/02(2018.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, IEEE, 3GPP, 百度, BAIDU: 定位, 位置, 整周, 整数, 模糊度, 载波, 相位, 测量, 到达, 时间, 到达角, 可靠, 概率, 确定, 上报, position, location, integer, ambiguity, carrier, phase, measure, arrival, time, TOA, angle of arrival, AOA, reliability, probability, determinat, report

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 113691929 A (DATANG MOBILE COMMUNICATIONS EQUIPMENT CO., LTD.) 23 November 2021 (2021-11-23)<br>    description, paragraphs [0071]-[0281], and figures 1-9 | 1-24 |
| Y | US 6832155 B2 (ITT MANUFACTURING ENTERPRISES, INC.) 14 December 2004 (2004-12-14)<br>    description, columns 2-3 | 1-24 |
| Y | CN 113747338 A (DATANG MOBILE COMMUNICATIONS EQUIPMENT CO., LTD.) 03 December 2021 (2021-12-03)<br>    description, paragraphs [0283]-[0339] | 1-24 |
| A | CN 113840321 A (DATANG MOBILE COMMUNICATIONS EQUIPMENT CO., LTD.) 24 December 2021 (2021-12-24)<br>    entire document | 1-24 |
| A | CN 115104348 A (HUAWEI TECHNOLOGIES CO., LTD.) 23 September 2022 (2022-09-23)<br>    entire document | 1-24 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 August 2024** | **24 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT<br>Information on patent family members | | | | International application No.<br>**PCT/CN2024/099669** | | | |
|---|---|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| CN | 113691929 | A | 23 November 2021 | CN | 113691929 | B | 26 July 2022 |
| | | | | TW | 202145814 | A | 01 December 2021 |
| | | | | US | 2023180172 | A1 | 08 June 2023 |
| | | | | WO | 2021227821 | A1 | 18 November 2021 |
| | | | | EP | 4152774 | A1 | 22 March 2023 |
| | | | | EP | 4152774 | A4 | 08 November 2023 |
| | | | | TW | I778607 | B1 | 21 September 2022 |
| US | 6832155 | B2 | 14 December 2004 | US | 2004225438 | A1 | 11 November 2004 |
| CN | 113747338 | A | 03 December 2021 | CN | 113747338 | B | 24 March 2023 |
| CN | 113840321 | A | 24 December 2021 | CN | 113840321 | B | 30 January 2024 |
| | | | | WO | 2021258786 | A1 | 30 December 2021 |
| | | | | US | 2023247451 | A1 | 03 August 2023 |
| | | | | EP | 4174528 | A1 | 03 May 2023 |
| | | | | JP | 2023532291 | W | 27 July 2023 |
| | | | | KR | 20230028456 | A | 28 February 2023 |
| CN | 115104348 | A | 23 September 2022 | WO | 2021203443 | A1 | 14 October 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310794329